# EUROPEAN PATENT SPECIFICATION

(11) **EP 3 543 770 B1**
(45) Date of publication and mention of the grant of the patent: **02.06.2021**
(21) Application number: 19162612.6
(22) Date of filing: 13.03.2019
(51) Int. Cl.: G02B 27/01, G02B 27/00

(54) **OPTICAL SCANNER, IMAGE PROJECTION APPARATUS, MOBILE OBJECT, AND OPTICAL SCANNER MANUFACTURING METHOD**
OPTISCHER SCANNER, BILDPROJEKTIONSVORRICHTUNG, MOBILES OBJEKT UND HERSTELLUNGSVERFAHREN FÜR OPTISCHEN SCANNER
SCANNER OPTIQUE, APPAREIL DE PROJECTION D'IMAGES, OBJET MOBILE ET PROCÉDÉ DE FABRICATION D'UN SCANNER OPTIQUE

(30) Priority: 19.03.2018 JP 2018050915
(43) Date of publication of application: 25.09.2019
(73) Proprietor: Ricoh Company, Ltd., Tokyo 143-8555 (JP)
(72) Inventor: OGINO, Shimpei, Tokyo 143-8555 (JP); NAKAJIMA, Tomohiro, Kanagawa 222-8530 (JP)
(74) Representative: J A Kemp LLP

(56) References cited:
- EP-A2- 0 814 358
- JP-A- H10 282 454
- US-A- 4 272 151
- US-A1- 2009 323 027
- US-A1- 2011 310 450
- US-A1- 2018 070 062

## Description

### BACKGROUND

### Technical Field

Embodiments of the present disclosure relate to an optical scanner, an image projection apparatus, a mobile object, and a method of manufacturing the optical scanner.

### Background Art

In the related art, an optical scanner that deflects the light emitted from a light source to perform optical scanning on a target scanning area is known in the art.

For example, JP-2004-110030-A discloses an optical scanner provided with a light deflector. The light deflector deflects the light emitted from a light source in a main scanning direction and a sub-scanning direction to perform optical scanning on a target scanning area. The light deflector provided for the optical scanner is a micro-electromechanical systems (MEMS) device that rotates a reflection mirror whose axis is supported by a torsion bar on the axis of the torsion bar to reflect and deflect the light incident on the reflection mirror, which is emitted from the light source.

However, in a light deflector such as a MEMS device, astigmatism may occur in the deflected light, and the beam spot diameter of the deflected light spreads out due to such astigmatism. This causes a problem that desired scanning light cannot be obtained.

JR H10 282454 A discloses a non-polarizing half mirror joining two large and small transparent flat plates through a semi-transparent film as a filter film. The thickness of the first transparent flat plate and the second transparent flat plate are set equal so as to uniformize the generating amount of astigmatic aberrations.

US 2009/323027 discloses a light source device including: a light source section adapted to emit a light beam; a first optical element provided with a first entrance surface to which the light beam emitted from the light source section is input, and adapted to transmit the light beam; and a second optical element provided with a second entrance surface to which the light beam transmitted through the first optical element is input, and adapted to transmit the light beam, wherein the first entrance surface is tilted towards a direction rotated around a primary axis with respect to a principal ray of the light beam input to the first entrance surface, and the second entrance surface is tilted towards a direction rotated around a secondary axis substantially perpendicular to the primary axis with respect to the principal ray of the light beam input to the second entrance surface.

EP 0 814 358 A2 discloses an inclined mirror provided in a cylindrical housing which has an open end and a closed end. An optical planar glass plate or window is mounted at the open end of the cylindrical housing. A laser beam enters the housing through the window and is reflected off the inclined mirror. The reflected beam leaves the housing through a side aperture in the housing. The cylindrical housing is rotated to scan the beam through a range of angles. The angular position of the window can be adjusted relative to the inclined mirror, thus compensating for the dynamic astigmatism due to rotation.

US 4 272 151 A discloses an apparatus which provides optical scanning with both high resolution and high speed. A low resolution acousto-optic deflector is scan-center coupled with a rotating scanner to allow high scanning speed without degrading the resolution characteristics associated with a rotating scanner. A mirror having a parabolic reflective surface exhibiting spherical aberration cooperates with a rotating multi-faceted cylindrical mirror to maintain the imaging focal point of the beam provided by the apparatus in a flat image field as the beam is caused to scan the field.

US 2011/310450 A1 discloses an optical scanning device including: a light source unit that includes a light emitting unit composed of a laser light source emitting linearly polarized light inside a package member; a deflector that deflects a light beam emitted from the light emitting unit; a pre-deflector optical system arranged on an optical path between the light emitting unit and the deflector; and a scanning optical system that scans a target surface to be scanned with the light beam deflected by the deflector. The pre-deflector optical system includes at least two parallel plate optical elements each composed of a transparent medium having an incident surface and an exit surface parallel to each other. The parallel plate optical elements are arranged to be tilted in inclination that is opposite to each other in a plane of polarization of the linearly polarized light.

US 2018/070062 A1 discloses a display apparatus including: a light source to emit light; a dimming unit including a plurality of regions having transmittances that are mutually different from one another; a switching unit to switch a region of the dimming unit through which the light passes, between the plurality of regions of the dimming unit; a scanning unit to scan a scan area at a predetermined frame rate with the light, the scan area having a first area in which an image is formed and a second area different from the first area; a sensor to detect a light amount of the light emitted to the second area; and a controller to determine a boundary timing at which the light has passed through a boundary portion between two adjacent regions of the dimming unit based on characteristics of a temporal change in the detected light amount.

### SUMMARY

According to the present invention there is provided an optical scanner, an image projection apparatus, a mobile object, and a method of manufacturing the optical scanner as specified in the claims.

According to one aspect of the present disclosure, the astigmatism caused to the light deflected by the light deflector can be reduced.

### BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.
FIG. 1 is a schematic diagram illustrating an optical scanner according to an embodiment of the present disclosure.
FIG. 2 is a schematic block diagram illustrating a hardware configuration of the optical scanner of FIG. 1.
FIG. 3 is a schematic block diagram illustrating a functional configuration of a control device of the optical scanner of FIG. 1.
FIG. 4 is a flowchart of the processes performed by the optical scanner of FIG. 1.
FIG. 5 is a plan view of a light deflector in the optical scanner of FIG. 1 when viewed from +Z-direction.
FIG. 6 is a P-P' sectional view of the light deflector illustrated in FIG. 5.
FIG. 7 is a Q-Q' sectional view of the light deflector illustrated in FIG. 5.
FIG. 8A, FIG. 8B, and FIG. 8C are schematic diagrams each illustrating the deformation of a second driving circuit of a light deflector, according to an embodiment of the present disclosure.
FIG. 9A is a graph illustrating the waveform of a driving voltage A to be applied to a piezoelectric drive circuit group A in a light deflector, according to an embodiment of the present disclosure.
FIG. 9B is a graph illustrating the waveform of a driving voltage B to be applied to a piezoelectric drive circuit group B in a light deflector, according to an embodiment of the present disclosure.
FIG. 9C is a graph illustrating an example in which the waveform of the driving voltage in FIG. 9A and the waveform of the driving voltage in FIG. 9B are superimposed on top of one another.
FIG. 10 is a diagram illustrating the optical scanning performed by the optical scanner of FIG. 1.
FIG. 11 is a schematic diagram illustrating a perspective view of a light-intensity adjuster provided for the optical scanner of FIG. 1.
FIG. 12 is a perspective view of a state in which a light-intensity adjustable member is moved to a home position (HP) in the optical scanner of FIG. 1.
FIG. 13 is a flowchart of the start-up routine processes performed by a control device, according to an embodiment of the present disclosure.
FIG. 14 is a schematic diagram illustrating a perspective view of a light-intensity adjuster, according to a modification of the above embodiment.
FIG. 15 is a sectional view of the reflection plane of a light deflector of the optical scanner of FIG. 1, illustrating how the reflection plane is curved on a cross section orthogonal to the axis of a torsion bar.
FIG. 16 is a diagram illustrating an inclined direction of a light-intensity adjustable member, according to an embodiment of the invention.
FIG. 17A is a diagram illustrating a sectional view of a light-intensity adjustable member along a cross section perpendicular to the main scanning direction (i.e., the x-direction), according to an embodiment of the invention.
FIG. 17B is a diagram illustrating a sectional view of a light-intensity adjustable member along a cross section perpendicular to the sub-scanning direction (i.e., the y-direction), according to an embodiment of the invention.
FIG. 18 is a schematic diagram illustrating a configuration of the light source according to an example.
FIG. 19 is a schematic diagram illustrating a vehicle provided with a heads-up display according to an embodiment of the present disclosure.
FIG. 20 is a schematic diagram illustrating a heads-up display according to an embodiment of the present disclosure.
FIG. 21 is a schematic diagram illustrating an image forming apparatus provided with an optical writing device, according to an embodiment of the present disclosure.
FIG. 22 is a schematic diagram illustrating a configuration of an optical writing device according to an embodiment of the present disclosure.
FIG. 23 is a schematic diagram illustrating a vehicle provided with a light detection and ranging (LiDAR) device, according to an embodiment of the present disclosure.
FIG. 24 is a schematic diagram illustrating a configuration of a LiDAR device according to an embodiment of the present disclosure.

The accompanying drawings are intended to depict embodiments of the present disclosure and should not be interpreted to limit the scope of the present invention, which is defined in the appended claims. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

Embodiments of the present disclosure are described below in detail with reference to the drawings.

### First Embodiment

Firstly, an optical scanner 10 according to a first embodiment of the present disclosure is described below in detail with reference to the accompanying drawings.

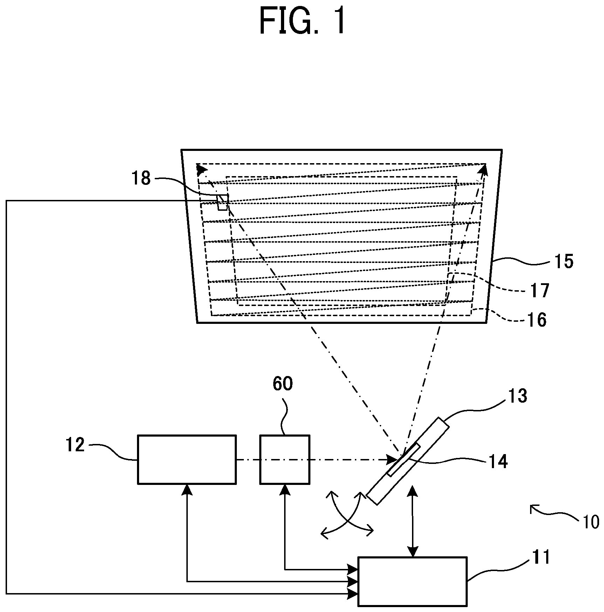

FIG. 1 is a schematic diagram illustrating the optical scanner 10 according to the present embodiment.

As illustrated in FIG. 1, the optical scanner 10 deflects the light emitted from a light source 12 in accordance with the control of a control device 11, with a reflection plane 14 provided for a light deflector 13, so as to optically scan a target surface 15. A scannable area 16 on which the light deflector 13 can perform optical scanning includes an effective scanning area 17. A light receiver 18 is provided on the target surface 15, inside the scannable area 16 but outside the effective scanning area 17. The optical scanner 10 includes the control device 11, the light deflector 13, the light receiver 18, and the light-intensity adjuster 60.

For example, the control device 11 is an electronic circuit unit provided with a central processing unit (CPU) and a field-programmable gate array (FPGA). For example, the light source 12 is a laser device that emits laser beams. For example, the light deflector 13 is provided with a reflection plane 14, and the light deflector 13 serves as a micro-electromechanical systems (MEMS) device that can move the reflection plane 14. For example, the target surface 15 is a screen. For example, the light receiver 18 is a photodiode (PD) that receives light and outputs a light signal.

The control device 11 generates a control signal for the light source 12 and the light deflector 13 based on the optical scanning information obtained from an external apparatus or the like, and outputs a driving signal to the light source 12 and the light deflector 13 based on the generated control signal. Moreover, the control device 11 synchronizes the light source 12 with the light deflector 13, and generates a control signals, based on a signal output from the light source 12, a signal output from the light deflector 13, and a light signal output from the light receiver 18. Further, the control device 11 generates a control signal for the light-intensity adjuster 60 based on the results of the light-intensity detection performed by the light receiver 18, and outputs a driving signal to the light-intensity adjuster 60 based on the generated control signal.

The light source 12 emits light based on the driving signal input from the control device 11.

The light deflector 13 moves the reflection plane 14 at least uniaxially (one-dimensionally) or biaxially (two-dimensionally) to deflect the light emitted from the light source 12, based on the driving signal input from the control device 11. The light deflector 13 according to the present embodiment is satisfactory as long as it deflects light at least in a sub-scanning direction that corresponds to the direction in which scanning lines are arranged. In other words, one light deflector may perform optical scanning in both the main scanning direction that corresponds to the direction in which the scanning lines extend and the sub-scanning direction. Alternatively, the optical scanning in the main scanning direction and the sub-scanning direction may be implemented by different light deflectors. The driving signal has a prescribed drive frequency. The light deflector 13 has a prescribed eigen frequency (that may be referred to as a resonant frequency).

Due to this configuration, for example, the reflection plane 14 of the light deflector 13 can biaxially be moved in a reciprocating manner within a predetermined range, and the light that is emitted from the light source 12 to enter the reflection plane 14 can be deflected to perform optical scanning, under control of the control device 11, which is based on the image data that is an example of the optical scanning information. Accordingly, an image can be projected onto the target surface 15 as desired.

The light deflector 13 and the control performed by the control device 11 are described later in detail.

The light-intensity adjuster 60 adjusts the intensity of transmission light of the light emitted from the light source 12, based on the driving signal inputs from the control device 11. The light-intensity adjuster 60 and the control performed by the control device 11 are described later in detail.

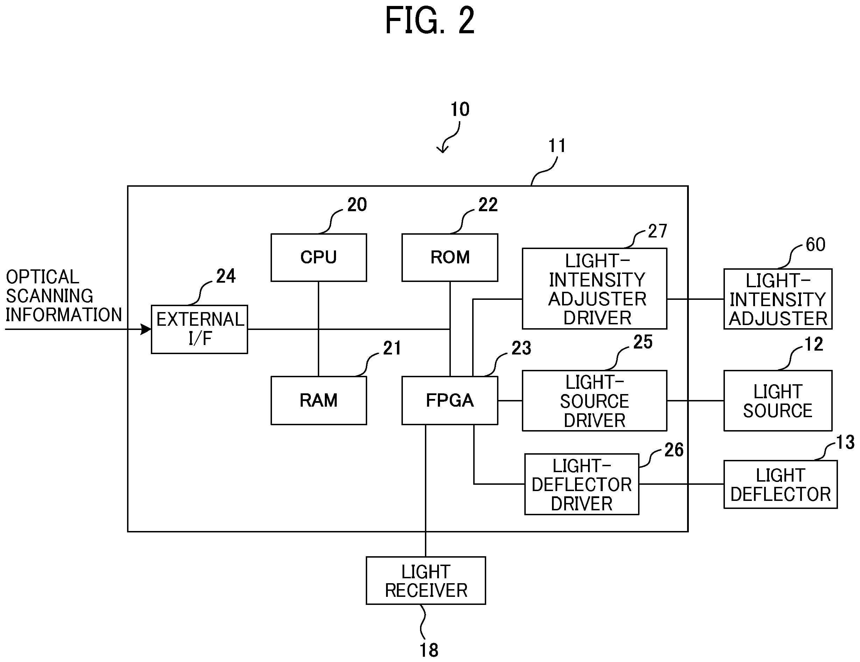

A hardware configuration of the optical scanner 10 is described below with reference to FIG. 2.

FIG. 2 is a schematic block diagram illustrating a hardware configuration of the optical scanner 10 according to the present embodiment.

As illustrated in FIG. 2, the optical scanner 10 includes the control device 11, the light source 12, the light deflector 13, and the light receiver 18, which are electrically connected to each other. In particular, the control device 11 is described below in detail.

The control device 11 includes a central processing unit (CPU) 20, a random access memory (RAM) 21, a read only memory (ROM) 22, a field-programmable gate array (FPGA) 23, an external interface (I/F) 24, a light-source driver 25, and a light-deflector driver 26, and a light-intensity adjuster driver 27.

The CPU 20 loads into the RAM 21 a program or data from a storage device such as the ROM 22 and performs processes. Accordingly, the controls or functions of the entirety of the control device 11 are implemented. The RAM 21 is a volatile storage device that temporarily stores data or a computer program.

The ROM 22 is a read-only nonvolatile storage device that can store a computer program or data even when the power is switched off, and stores, for example, data or a processing program that is executed by the CPU 20 to control the multiple functions of the optical scanner 10.

The FPGA 23 is a circuit that outputs a control signal used for the light-source driver 25, the light-deflector driver 26, and the light-intensity adjuster driver 27, in accordance with the processing performed by the CPU 20. Moreover, the FPGA 23 obtains the signal output from the light source 12, the light deflector 13, and the light-intensity adjuster 60 through the light-source driver 25, the light-deflector driver 26, and the light-intensity adjuster driver 27, and obtains a light signal from the light receiver 18. Then, the FPGA 23 generates a control signal based on the obtained output signal and light signal.

For example, the external interface 24 is an interface with an external device or the network. For example, the external device may be a host device such as a personal computer (PC) and a storage device such as a universal serial bus (USB) memory, a secure digital (SD) card, a compact disc (CD), a digital versatile disc (DVD), a hard disk drive (HDD), and a solid state drive (SSD). For example, the network may be a controller area network (CAN) of a vehicle, a local area network (LAN), car-to-car communication, and the Internet. The external interface 24 is satisfactory as long as it has a configuration by which connection to an external device or communication with an external device is achieved. The external I/F 24 may be provided for each external device.

The light-source driver 25 is an electric circuit that outputs a driving signal such as a driving voltage to the light source 12 in accordance with the control signal input from the FPGA 23.

The light-deflector driver 26 is an electric circuit that outputs a driving signal such as a driving voltage to the light deflector 13 in accordance with the control signal input from the FPGA 23.

The light-intensity adjuster driver 27 is an electric circuit that outputs a driving signal such as a driving voltage to the light-intensity adjuster 60 in accordance with the control signal input from the FPGA 23.

In the control device 11, the CPU 20 acquires the optical scanning information from an external device or a network through the external interface 24. Note that any configuration may be used as long as the CPU 20 can acquire the optical scanning information, and the optical scanning information may be stored in the ROM 22 or in the FPGA 23 in the control device 11, or a storage device such as an SSD may be newly provided in the control device 11 and the optical scanning information may be stored in the storage device.

The optical scanning information herein is information indicating the way of optical scanning to be performed on the target surface 15 by using the light source 12 and the light deflector 13. For example, the optical scanning information is image data in a case where an image is to be displayed by optical scanning, and the optical scanning information is writing data indicating the order and portion of writing in a case where optical writing is to be performed by optical scanning. Furthermore, for example, the optical scanning information is irradiation data indicating the timing and range of irradiation of light for object recognition in a case where an object is to be recognized by optical scanning.

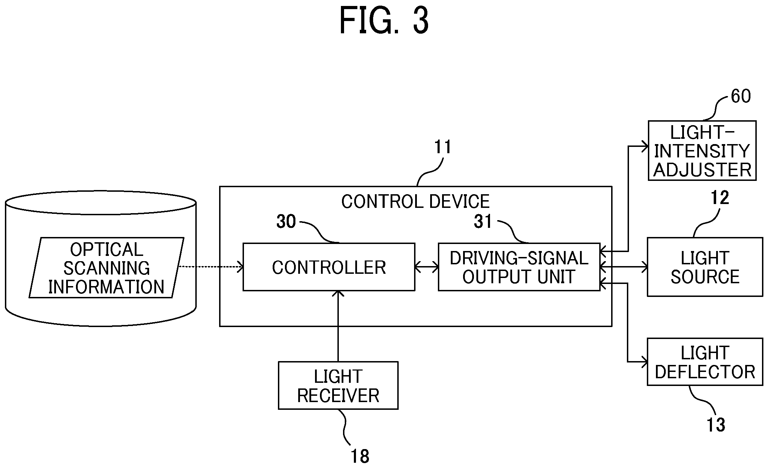

A functional configuration of the control device 11 in the optical scanner 10 is described below with reference to FIG. 3.

FIG. 3 is a block diagram illustrating the functions of the control device 11 in the optical scanner 10, according to the present embodiment.

The control device 11 according to the present embodiment can implement the functional configuration described below by using commands from the CPU 20 and the hardware configuration illustrated in FIG. 2.

As illustrated in FIG. 3, the control device 11 includes a controller 30 and a drive-signal output unit 31 as functions. For example, the controller 30 is implemented by the CPU 20 or the FPGA 23, and the controller 30 obtains the optical scanning information and signals from multiple devices, generates control signals based on the obtained optical scanning information and signals, and outputs the control signals to the drive-signal output unit 31.

For example, the controller 30 acquires image data from an external device or the like as the optical scanning information, generates a control signal from the image data through predetermined processing, and outputs the control signal to the drive-signal output unit 31. Moreover, the controller 30 obtains output signals from each of the light source 12, the light deflector 13, and the light-intensity adjuster 60 through the drive-signal output unit 31, and generates control signals based on the obtained multiple output signals. Furthermore, the controller 30 acquires a light signal from the light receiver 18, and generates a control signal based on the acquired light signal.

For example, the driving-signal output unit 31 is implemented by the light-source driver 25, the light-deflector driver 26, and the light-intensity adjuster driver 27, and outputs a driving signal to the light source 12, the light deflector 13, and the light-intensity adjuster 60 based on the received control signal. For example, the driving-signal output unit 31 serves as an application unit that applies a driving voltage to the light source 12, the light deflector 13, and the light-intensity adjuster 60. The driving-signal output unit 31 may be provided for each destination to which a driving signal is output.

Note that the driving signal is a signal used to control operation of the light source 12, the light deflector 13, and the light-intensity adjuster 60. For example, the driving signal in the light source 12 is a driving voltage used to control the timing at which light is emitted and the irradiation intensity. Moreover, for example, the driving signal in the light deflector 13 is a driving voltage used to control the timing and range of motion where the reflection plane 14 provided for the light deflector 13 is moved. Further, for example, the driving signal in the light-intensity adjuster 60 is a driving voltage used to control the timing and range of motion where a light-intensity adjustable member as will be described later in detail is moved.

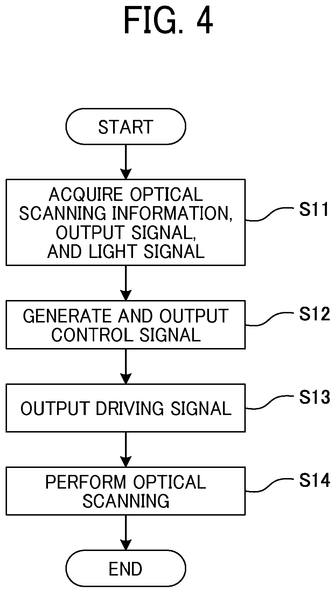

Processes in which the optical scanner 10 performs optical scanning on the target surface 15 is described below with reference to FIG. 4.

FIG. 4 is a flowchart of the processes performed by the optical scanner 10 according to the present embodiment.

In step S11, the controller 30 obtains optical scanning information from, for example, an external device. Moreover, the controller 30 obtains an output signal from the light source 12 and the light deflector 13, respectively, through the drive-signal output unit 31, and obtains a light signal from the light receiver 18.

In step S12, the controller 30 generates a control signal from obtained optical scanning information, multiple output signals, and the light signal, and outputs the generated control signal to the drive-signal output unit 31. Since the output signals and light signal cannot be obtained in some cases at the time of starting, a predetermined operation may be performed in another step at the time of starting.

In step S13, the driving-signal output unit 31 outputs a driving signal to the light source 12, the light deflector 13, and the light-intensity adjuster 60, based on the received control signal.

In step S14, the light source 12 emits light based on the received driving signal. The light deflector 13 moves the reflection plane 14 based on the received driving signal. The driving of the light source 12 and the light deflector 13 causes light to be deflected in a given direction, and optical scanning is performed. A plurality of transmissive areas are formed on a light-intensity adjustable member, the intensity of transmission light is different from each other among those transmissive areas. In the light-intensity adjuster 60, the light-intensity adjustable member is moved such that a desired one of the multiple transmissive areas is placed in the optical path based on the received driving signal.

In the optical scanner 10 according to the present embodiment, a single control device 11 includes a device and function used to control the light source 12, the light deflector 13, and the light-intensity adjuster 60. However, control devices for the light source 12, the light deflector 13, and the light-intensity adjuster 60 may separately be provided.

In the optical scanner 10 according to the present embodiment, a single control device 11 has the functions of the controller 30 and the functions of the drive-signal output unit 31 for the light source 12, the light deflector 13, and the light-intensity adjuster 60, respectively. However, these functions may separately be provided, and for example, a separate drive-signal output device with the drive-signal output unit 31 may be provided in addition to the control device 11 including the controller 30.

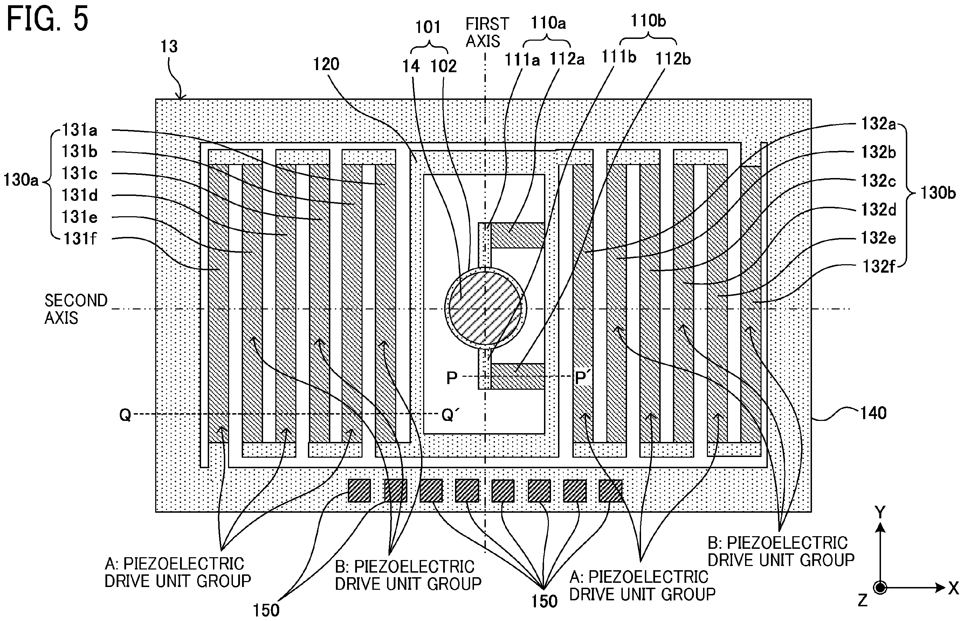

The light deflector 13 is described below in detail with reference to FIG. 5, FIG. 6, and FIG. 7.

FIG. 5 is a plan view of the light deflector 13 of a double-supported type, by which light can be deflected biaxially, according to the present embodiment.

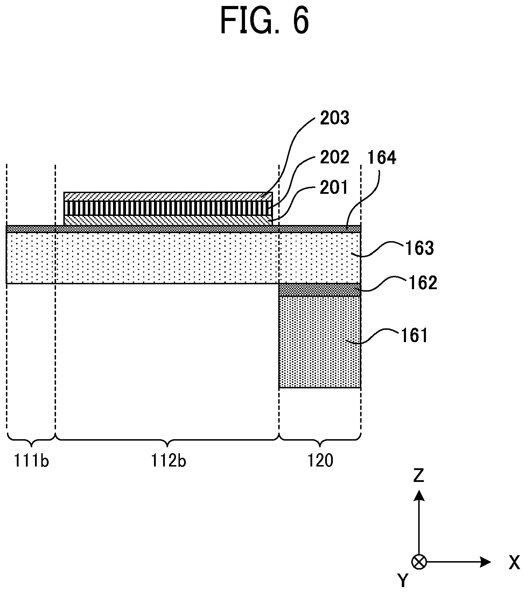

FIG. 6 is a P-P' sectional view of FIG. 5.

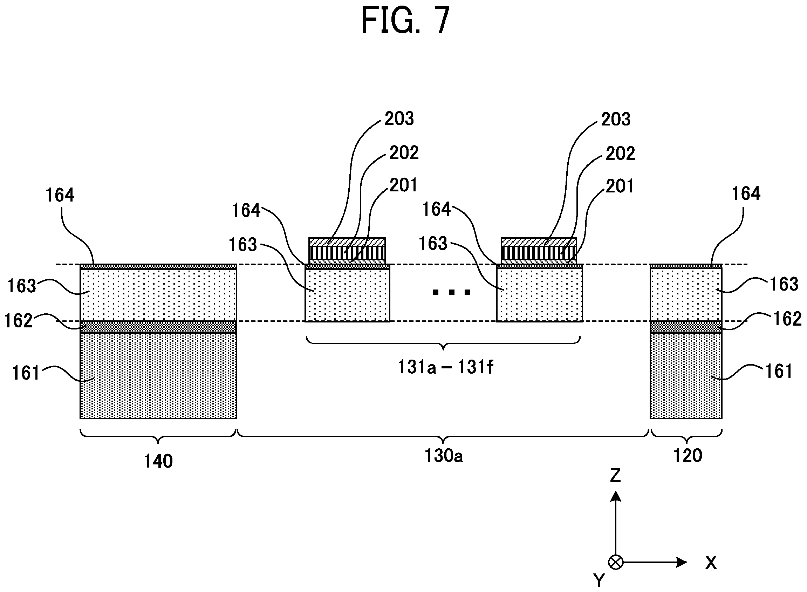

FIG. 7 is a Q-Q' sectional view of FIG. 5.

As illustrated in FIG. 5, the light deflector 13 includes a mirror unit 101, first driving circuits 110a and 110b, a first supporting unit 120, second driving circuits 130a and 130b, a second supporting unit 140, and electrode connecting parts 150. The mirror unit 101 reflects incident light. The first driving circuits 110a and 110b are connected to the mirror unit 101 and drive the mirror unit 101 around a first axis that is parallel to the Y-axis. The first supporting unit 120 supports the mirror unit 101 and the first driving circuits 110a and 110b. The second driving circuits 130a and 130b are connected to the first supporting unit 120 and drive the mirror unit 101 and the first supporting unit 120 around a second axis that is parallel to the X-axis. The second supporting unit 140 supports the second driving circuits 130a and 130b. The electrode connecting parts 150 are electrically connected to the first driving circuits 110a and 110b, the second driving circuits 130a and 130b, and the control device 11.

In the light deflector 13, for example, components are integrally formed as follows. On a single silicon-on-insulator (SOI) substrate, the reflection plane 14, first piezoelectric drive circuits 112a and 112b, second piezoelectric drive circuits 131a to 131f and 132a to 132f, the electrode connecting parts 150, and the like are formed, and then the substrate is processed by etching or the like. Note that the components may be formed after the SOI substrate has been processed or while the SOI substrate is being processed.

As illustrated in FIG. 6, the SOI substrate is a substrate in which, on a first silicon layer formed of single crystal silicon (Si), a silicon oxide layer 162 is formed, and on the silicon oxide layer 162, a second silicon layer formed of single crystal silicon is further formed. In the following description, the first silicon layer and the second silicon layer may be referred to as a silicon supporting layer 161 and a silicon active layer 163, respectively. Note that the SOI substrate is used after a silicon oxide layer 164 has been formed on the surface of the silicon active layer 163 by sintering.

The silicon active layer 163 has a small thickness in the Z-axis direction compared with the X-axis direction or the Y-axis direction, and thus, the silicon active layer 163, or members including the silicon active layer 163 and the silicon oxide layer 164, serve as an elastic member having elasticity. Although the silicon oxide layer 164 is provided in the present embodiment in order to prevent electric contact between the silicon active layer 163 and a lower electrode 201, the silicon oxide layer 164 may be replaced with a different insulative material.

The SOI substrate does not always have to be planar, and may have, for example, a curvature. As long as the substrate can be integrally processed by etching or the like and can be partially elastic, the member used for forming the light deflector 13 is not limited to the SOI substrate.

The mirror unit 101 includes, for example, a circular mirror-unit base 102 and the reflection plane 14 that is formed on the +Z surface of the mirror-unit base 102. The mirror-unit base 102 includes, for example, the silicon active layer 163 and the silicon oxide layer 164.

The reflection plane 14 includes a thin metal film made of, for example, aluminum (Al), gold (Au), and silver (Ag). The mirror unit 101 may include a rib for strengthening the mirror unit on the -Z-side surface of the mirror-unit base 102.

The rib includes, for example, the silicon supporting layer 161 and the silicon oxide layer 162, and can prevent distortion on the reflection plane 14 caused by the movement.

As illustrated in FIG. 5, the first driving circuits 110a and 110b include two torsion bars 111a and 111b and first piezoelectric drive circuits 112a and 112b. An end of each of the torsion bars 111a and 111b is connected to the mirror-unit base 102, and the torsion bars 111a and 111b extend in a first axis direction to support the mirror unit 101 in a movable manner. An end of each of the first piezoelectric drive circuits 112a and 112b is connected to a corresponding one of the torsion bars 111a and 111b, and the other end thereof is connected to an internal circumferential portion of the first supporting unit 120.

As illustrated in FIG. 6, the torsion bars 111a and 111b include the silicon active layer 163 and the silicon oxide layer 164. the first piezoelectric drive circuits 112a and 112b include the silicon active layer 163, the silicon oxide layer 164, the lower electrode 201, a piezoelectric circuit 202, and an upper electrode 203. The lower electrode 201, the piezoelectric circuit 202, and the upper electrode 203 are formed in this order on the +Z surface of the silicon active layer 163 and the silicon oxide layer 164 serving as an elastic member.

For example, each of the upper electrode 203 and the lower electrode 201 is made of gold (Au) or platinum (Pt). For example, the piezoelectric circuit 202 is made of lead zirconate titanate (PZT), which is a piezoelectric material.

Referring back to FIG. 5, the first supporting unit 120 is, for example, a rectangular support body including the silicon supporting layer 161, the silicon oxide layer 162, the silicon active layer 163, and the silicon oxide layer 164, and surrounding the mirror unit 101.

The second driving circuits 130a and 130b include, for example, the plurality of second piezoelectric drive circuits 131a to 131f and 132a to 132f that are joined so as to turn. An end of each of the second driving circuits 130a and 130b is connected to an perimeter zone of the first supporting unit 120, and the other end thereof is coupled to an internal circumferential portion of the second supporting unit 140. This kind of structure is referred to as meandering structure. Moreover, the structure of the second piezoelectric drive circuits 131a to 131f and 132a to 132f, in which a beam (bar) and a member having a driving force are provided, is also referred to as a drive cantilever.

In the present embodiment, a connection part of the second driving circuit 130a and the first supporting unit 120 and a connection part of the second driving circuit 130b and the first supporting unit 120 are in point symmetry with respect to the center of the reflection plane 14. Furthermore, a connection part of the second driving circuit 130a and the second supporting unit 140 and a connection part of the second driving circuit 130b and the second supporting unit 140 are in point symmetry with respect to the center of the reflection plane 14.

As illustrated in FIG. 7, the second driving circuits 130a and 130b include the silicon active layer 163, the silicon oxide layer 164, the lower electrode 201, the piezoelectric circuit 202, and the upper electrode 203. The lower electrode 201, the piezoelectric circuit 202, and the upper electrode 203 are formed in this order on the +Z surface of the silicon active layer 163 and the silicon oxide layer 164 serving as the elastic member. For example, each of the upper electrode 203 and the lower electrode 201 is made of gold (Au) or platinum (Pt). For example, the piezoelectric circuit 202 is made of lead zirconate titanate (PZT), which is a piezoelectric material.

Referring back to FIG. 5, the second supporting unit 140 is, for example, a rectangular support body including the silicon supporting layer 161, the silicon oxide layer 162, the silicon active layer 163, and the silicon oxide layer 164, and surrounding the mirror unit 101, the first driving circuits 110a and 110b, the first supporting unit 120, and the second driving circuits 130a and 130b.

The electrode connecting part 150 is, for example, formed on the +Z surface of the second supporting unit 140 and are electrically connected to the upper electrode 203 and the lower electrode 201 of each of the first piezoelectric drive circuits 112a and 112b and the second piezoelectric drive circuits 131a to 131f, and the control device 11 via electrode wiring of aluminum (Al) or the like.

Although this embodiment has illustrated an example in which the piezoelectric circuit 202 is formed on a surface (+Z surface) of the silicon active layer 163 and the silicon oxide layer 164 serving as the elastic member, the piezoelectric circuit 202 may be formed on another surface (e.g., -Z surface) of the elastic member, or on both the surface and the other surface of the elastic member.

The shapes of the components are not limited to the shapes in the embodiment as long as the mirror unit 101 can be driven around the first axis or the second axis. For example, the torsion bars 111a and 111b and the first piezoelectric drive circuits 112a and 112b may have a shape with a curvature.

Furthermore, an insulating layer formed of a silicon oxide film may be formed on at least one of the +Z surface of the upper electrode 203 of the first driving circuits 110a and 110b, the +Z surface of the first supporting unit 120, the +Z surface of the upper electrode 203 of the second driving circuits 130a and 130b, and the +Z surface of the second supporting unit 140. In this case, electrode wiring is provided on the insulating layer, and the insulating layer is partially removed as an opening or is not formed at a connection spot where the upper electrode 203 or the lower electrode 201 and the electrode wiring are connected, so that the first driving circuits 110a and 110b, the second driving circuits 130a and 130b, and the electrode wiring can be designed with a higher degree of freedom, and furthermore, a short circuit as a result of contact between electrodes can be suppressed. For example, the insulating layer may be any member having an insulating property, and may have a function of an antireflective material by being formed as a thin film.

Next, control of the control device 11 that drives the first driving circuits 110a and 110b and the second driving circuits 130a and 130b of the light deflector 13 is described in detail. When a positive or negative voltage is applied in a polarizing direction, in proportion to the potential of the applied voltage, the piezoelectric circuit 202 included in the first driving circuits 110a and 110b and the second driving circuits 130a and 130b is deformed (for example, expansion and contraction) and exerts a so-called inverse piezoelectric effect. With this inverse piezoelectric effect, the first driving circuits 110a and 110b and the second driving circuits 130a and 130b move the mirror unit 101. Accordingly, the angle in which light flux that is incident on the reflection plane 14 of the mirror unit 101 is deflected is referred to as a deflection angle. The deflection angle indicates the degree of deflection by the light deflector 13. The deflection angle with no voltage applied to the piezoelectric circuit 202 is set as zero, and deflection angles that are larger and smaller than the above angle are called positive and negative deflection angles, respectively.

First, control of the control device 11 to drive the first driving circuits 110a and 110b will be described. In the first driving circuits 110a and 110b, when a driving voltage is applied in parallel with the piezoelectric circuit 202 of the first piezoelectric drive circuits 112a and 112b through the upper electrode 203 and the lower electrode 201, the piezoelectric circuit 202 is deformed. The deformation of the piezoelectric circuit 202 causes the first piezoelectric drive circuits 112a and 112b to be bent.

As a result, through the torsion of the two torsion bars 111a and 111b, a driving force acts on the mirror unit 101 around the first axis, and the mirror unit 101 is moved around the first axis. The driving voltage to be applied to the first driving circuits 110a and 110b is controlled by the control device 11.

Concurrently, the control device 11 applies a driving voltage with a predetermined sine waveform to the first piezoelectric drive circuits 112a and 112b of the first driving circuits 110a and 110b, and thereby, the mirror unit 101 can be moved around the first axis in the period of the driving voltage with a predetermined sine waveform. Furthermore, for example, if the frequency of the sine-waveform voltage is set to about 20 kHz, which is substantially equal to a resonant frequency of the torsion bars 111a and 111b, by using resonance as a result of the torsion of the torsion bars 111a and 111b, the mirror unit 101 can be resonated at about 20 kHz.

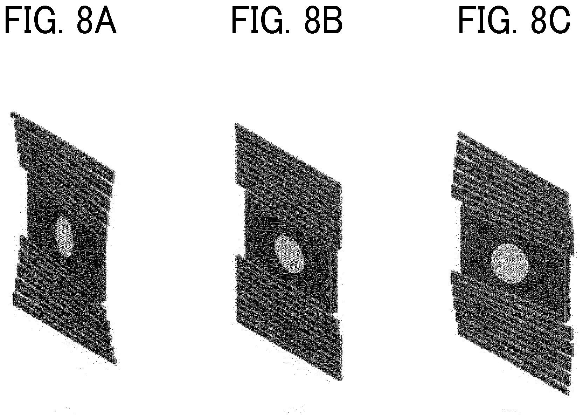

Next, control of the control device 11 that drives the second driving circuits 130a and 130b will be described with reference to FIG. 8A, FIG. 8B, and FIG. 8C.

FIG. 8A, FIG. 8B, FIG. 8C are schematic diagrams each illustrating the driving of the second driving circuits 130a and 130b of the light deflector 13, according to the present embodiment.

The hatched area indicates the mirror unit 101 or the like.

Among the plurality of second piezoelectric drive circuits 131a to 131f of the second driving circuit 130a, even-numbered second piezoelectric drive circuits counted from the second piezoelectric drive circuit 131a, which is the closest to the mirror unit 101, in other words, the second piezoelectric drive circuits 131b, 131d, and 131f referred to as a piezoelectric drive circuit group A (also referred to as first actuator).

Furthermore, among the plurality of second piezoelectric drive circuits 132a to 132f of the second driving circuit 130b, odd-numbered second piezoelectric drive circuits counted from the second piezoelectric drive circuit 132a, which is the closest to the mirror unit 101, in other words, the second piezoelectric drive circuits 132a, 132c, and 132e are also called piezoelectric drive circuit group A. When the driving voltage is applied in parallel with the piezoelectric drive circuit group A, the piezoelectric drive circuit group A is elastically deformed in one direction as illustrated in FIG. 8A, and the mirror unit 101 is moved around the second axis to form a positive deflection angle.

Among the plurality of second piezoelectric drive circuits 131a to 131f of the second driving circuit 130a, odd-numbered second piezoelectric drive circuits counted from the second piezoelectric drive circuit 131a, which is the closest to the mirror unit 101, in other words, the second piezoelectric drive circuits 131a, 131c, and 131e are called piezoelectric drive circuit group B (which may be referred to as a second actuator).

Furthermore, among the plurality of second piezoelectric drive circuits 132a to 132f of the second driving circuit 130b, even-numbered second piezoelectric drive circuits counted from the second piezoelectric drive circuit 132a, which is the closest to the mirror unit 101, in other words, the second piezoelectric drive circuits 132b, 132d, and 132f are also called piezoelectric drive circuit group B. When the driving voltage is applied in parallel with the piezoelectric drive circuit group B, the piezoelectric drive circuit group B is elastically deformed in one direction as illustrated in FIG. 8C, and the mirror unit 101 is moved around the second axis to form a negative deflection angle.

As illustrated in FIG. 8B, when no voltage is applied, or when the amount by which the mirror unit 101 is moved by the piezoelectric drive circuit group A by using voltage application is equal to the amount by which the mirror unit 101 is moved by the piezoelectric drive circuit group B by using voltage application, the deflection angle becomes zero.

As illustrated in FIG. 8A and FIG. 8C, in the second driving circuits 130a and 130b, the plurality of piezoelectric circuits 202 of the piezoelectric drive circuit group A or the plurality of piezoelectric circuits 202 of the piezoelectric drive circuit group B are elastically deformed, and thereby the amounts of movement as a result of bending can be accumulated so as to obtain a large deflection angle of the mirror unit 101 around the second axis. Moreover, the driving voltage is applied to the second piezoelectric drive circuit in a manner that the states illustrated in FIG. 8A, FIG. 8B, and FIG. 8C are repeated in a continuous manner, and thereby the mirror unit 101 can be driven around the second axis.

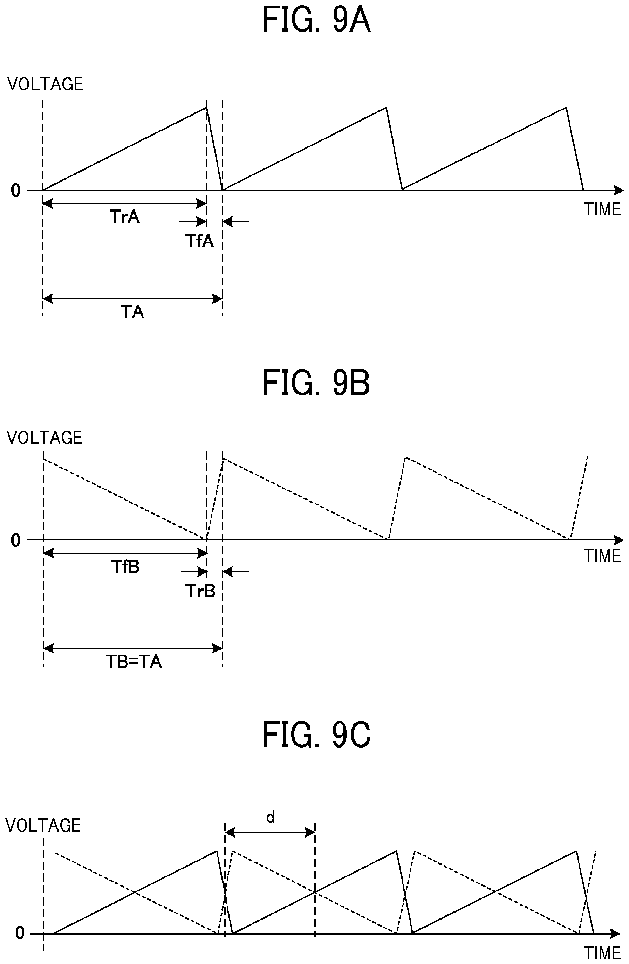

The driving signal (driving voltage) to be applied to the second driving circuits 130a and 130b is controlled by the control device 11. The driving voltage to be applied to the piezoelectric drive circuit group A (hereinafter referred to as "driving voltage A") and the driving voltage to be applied to the piezoelectric drive circuit group B (hereinafter referred to as "driving voltage B") will be described below with reference to FIG. 9A, FIG. 9B, and FIG. 9C. An application unit that applies the driving voltage A (first driving voltage) and an application unit that applies the driving voltage B (second driving voltage) are referred to as first and second application units, respectively.

FIG. 9A is a graph illustrating the waveform of the driving voltage A to be applied to the piezoelectric drive circuit group A of the light deflector 13, according to the present embodiment.

FIG. 9B is a graph illustrating the waveform of the driving voltage B to be applied to the piezoelectric drive circuit group B of the light deflector 13, according to the present embodiment.

FIG. 9C is a graph illustrating the waveform of the driving voltage A and the waveform of the driving voltage B that are superimposed on top of one another, according to the present embodiment.

As illustrated in FIG. 9A, the waveform of the driving voltage A to be applied to the piezoelectric drive circuit group A is, for example, in a sawtooth waveform, and the frequency thereof is, for example, 60 Hz. In the waveform of the driving voltage A, when the time width of a rise time in which the voltage increases from the minimum value to the next maximum value is denoted by TrA, and the time width of a fall time in which the voltage decreases from the maximum value to the next minimum value is denoted by TfA, for example, the ratio TrA:TfA=8.5:1.5 is set in advance. In this configuration, the ratio of TrA to one cycle is referred to as a symmetry of the driving voltage A.

As illustrated in FIG. 9B, for example, the waveform of the driving voltage B to be applied to the piezoelectric drive circuit group B is in a sawtooth waveform, and the frequency thereof is, for example, 60 Hz. In the waveform of the driving voltage B, when the time width of a rise time in which the voltage increases from the minimum value to the next maximum value is denoted by TrB, and the time width of a fall time in which the voltage decreases from the maximum value to the next minimum value is denoted by TfB, for example, the ratio TfB:TrB=8.5:1.5 is set in advance. In this configuration, the ratio of TfB to one cycle is referred to as a symmetry of the driving voltage B.

As illustrated in FIG. 9C, for example, a cycle TA of the waveform of the driving voltage A and a period TB of the waveform of the driving voltage B are set to be equal to each other. In this configuration, the driving voltage A and the driving voltage B have a phase difference d.

For example, the sawtooth waveform of the driving voltage A and the driving voltage B is generated by superimposing multiple sine waves on top of one another. Preferably, the frequency of the driving voltage A and the driving voltage B (drive frequency fs) is a half-integer multiple of the lowest-order natural frequency (f(1)) of the light deflector 13. For example, the drive frequency fs is desirably any of a 1/5.5 times, a 1/6.5 times, and a 1/7.5 times of the lowest-order natural frequency f(1). Thus, it is possible to suppress oscillation due to harmonic components of the drive frequency fs as a result of setting the drive frequency to the half-integer multiple. Such oscillation that adversely affects optical scanning is referred to as unwanted oscillation.

Although the saw-tooth-wave driving voltage is used as the driving voltages A and B in the present embodiment, the waveform is not limited to this and may be modified in accordance with device characteristics of the light deflector 13. For example, the driving voltage may have a waveform in which the crest of the sawtooth waveform is rounded or a waveform in which the linear region of the sawtooth waveform is curved. In such a configuration, the symmetry corresponds to the ratio of the rise time to one cycle or the ratio of the fall time to one cycle. Either the rise time or the fall time may be freely set as the reference.

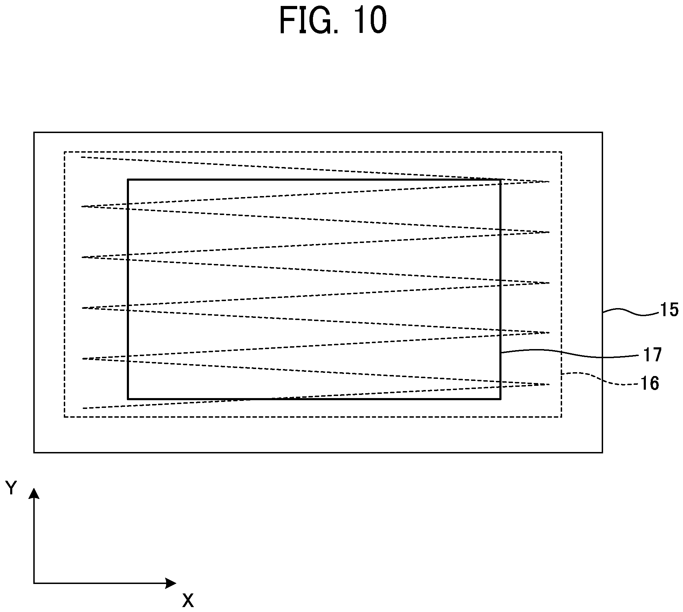

Next, a method of optical scanning performed by the optical scanner 10 is described with reference to FIG. 10.

FIG. 10 is a diagram illuminating the optical scanning performed by the optical scanner 10, according to the present embodiment.

The optical scanner 10 deflects light from the light source 12 by using the light deflector 13 in two directions, which are the main scanning direction and the sub-scanning direction, and performs optical scanning on the scannable area 16 including the effective scanning area 17 on the target surface 15, as illustrated in FIG. 10. As described above, in the main scanning direction (hereinafter also referred to as "X-axis direction"), which is one of the two directions, optical scanning is performed on the reflection plane 14 of the light deflector 13 by using high-speed driving using resonance in accordance with a sine-wave driving signal; and in the sub-scanning direction (hereinafter also referred to as "Y-axis direction"), which is the other direction, optical scanning is performed on the reflection plane 14 of the light deflector 13 by using non-resonant low-speed driving in accordance with a sawtooth-wave driving signal. Such a drive method for optical scanning in which two-direction optical scanning is performed in a zigzag manner is called raster scan.

In the above drive method, it is desired that optical scanning be performed at a constant speed in the sub-scanning direction (Y-axis direction) in the effective scanning area 17. If the scanning speed in the sub-scanning direction is not constant (if the scanning speed in the sub-scanning direction is uneven), for example, at the time of projecting an image by using optical scanning, the projected image may be degraded by, for example, variations in brightness or blurring of the projected image. For the constant scanning speed in the sub-scanning direction, it is desirable that the speed of the reflection plane 14 of the light deflector 13 around the second axis, that is, the temporal change of the deflection angle of the reflection plane 14 around the second axis, be constant in the effective scanning area 17.

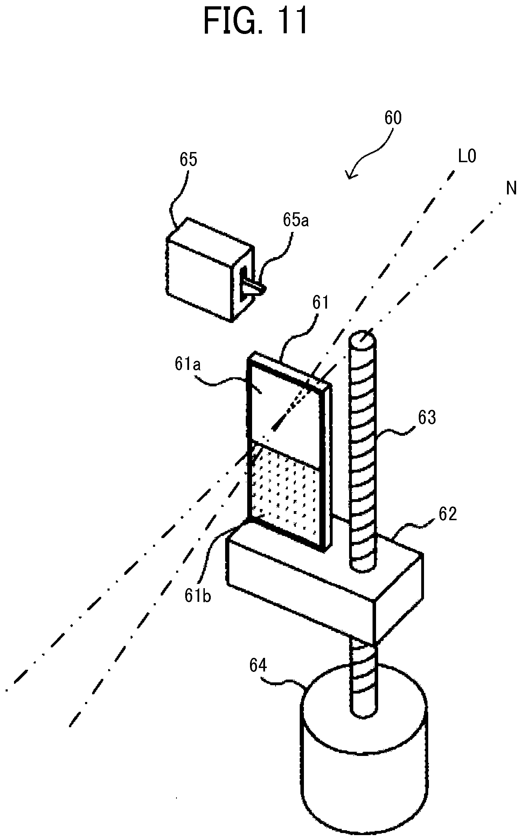

A configuration and operation of the light-intensity adjuster 60 is described below with reference to FIG. 11.

FIG. 11 is a schematic diagram illustrating a perspective view of the light-intensity adjuster 60, according to the present embodiment.

For example, the light-intensity adjuster 60 includes the light-intensity adjustable member 61, a holding member 62, a feed screw 63, a screw motor 64 composed of a stepping motor, and a home position (HP) sensor 65. Note that the home position will be referred to as "HP" in the following description.

The light-intensity adjustable member 61 includes a first dimmer 61a that serves as the first transmissive area and a second dimmer 61b that serves as the second transmissive area whose optical transmittance is lower than the first transmissive area. In FIG. 11, the light-intensity adjustable member 61 where the first dimmer 61a is placed in the optical path is illustrated.

The holding member 62 that holds the light-intensity adjustable member 61 has internal threads thereon, and the feed screw 63 threadably fits the internal threads. Moreover, the feed screw 63 is fixed to the axis of the motor so as to rotate together with the motor axis of the screw motor 64.

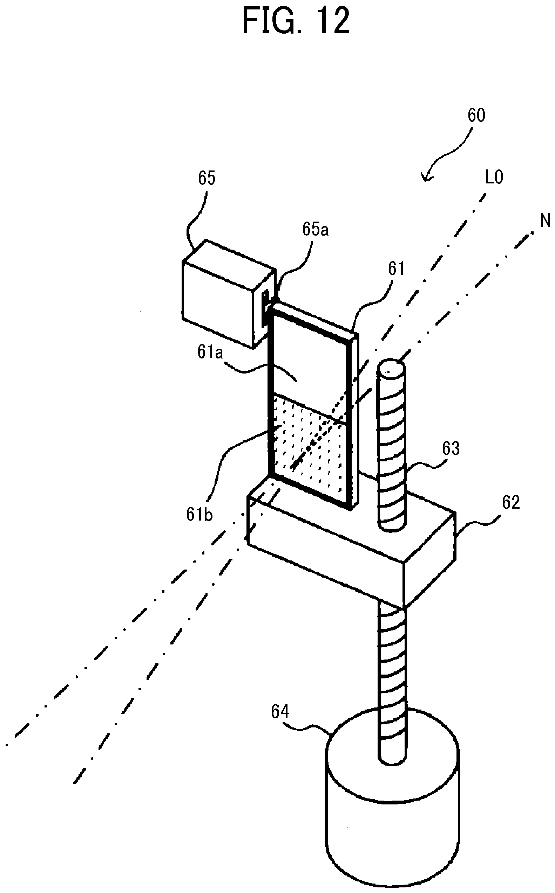

As the screw motor 64 is driven in forward direction or reverse direction, the feed screw 63 make the light-intensity adjustable member 61 move up and down together with the holding member 62. By so doing, the light-intensity adjustable member 61 is moved to a position where the first dimmer 61a is placed in the optical path as illustrated in FIG. 11, or the light-intensity adjustable member 61 is moved to a position where the second dimmer 61b is placed in the optical path as illustrated in FIG. 12. As described above, the dimmers (transmissive areas) disposed in the optical path are switched between the first dimmer 61a and the second dimmer 61b. Due to such a configuration, the light intensity of the light that has passed through the light-intensity adjustable member 61 can be changed.

Note that the amount of light-intensity adjustment performed by the light-intensity adjuster 60 is relatively large. When the light intensity is to be adjusted in a delicate manner, the intensity of light emission is adjusted at the light source 12.

Note that the position of the light-intensity adjustable member 61 where the second dimmer 61b is placed in the optical path serves as the home position (HP) of the light-intensity adjustable member 61. As illustrated in FIG. 12, the light-intensity adjustable member 61 that is placed at the home position (HP) pushes up a detection unit 65a of a home position (HP) sensor 65. As a result, the fact that the light-intensity adjustable member 61 is placed at the home position (HP) is detected, and a detection signal generated by the HP sensor 65 is output to the control device 11.

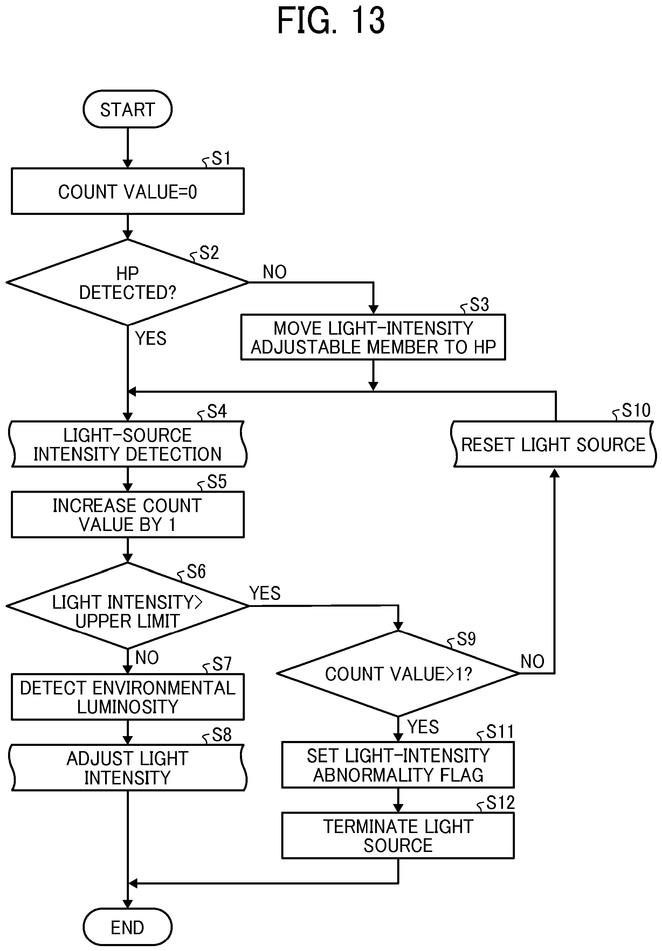

FIG. 13 is a flowchart of the start-up routine processes performed by the control device 11, according to the present embodiment.

Once the optical scanner 10 starts being supplied with power, such start-up routine processes are performed. The control device 11 that has started the start-up routine processes firstly sets the count value to zero (step S1), and then determines whether a detection signal has been input from the home position (HP) sensor 65. In other words, the control device 11 determines whether the light-intensity adjustable member 61 is placed at the home position (HP) (step S2). When it is determined that the light-intensity adjustable member 61 is placed at the home position (HP) ("Yes" (Y) in the step S2), the control device 11 performs the light-source intensity detection (step S4), as will be described later. By contrast, when it is determined that the light-intensity adjustable member 61 is not placed at the home position (HP) ("No" (N) in the step S2), the control device 11 moves the light-intensity adjustable member 61 to the HP (step S3). More specifically, the screw motor 64 is driven in forward direction until a detection signal is output from the home position (HP) sensor 65. After that, the light-source intensity detection is performed (step S4) as will be described later in detail.

Right before the light-source intensity detection (S4) is performed, the light-intensity adjustable member 61 is placed at the home position (HP). Accordingly, the second dimmer 61b with low transmittance exists in the optical path, and no light has been emitted from the light source 12. Due to this configuration, even if the light source 12 emits light abnormally afterward due to some sort of a malfunction or error, the glare that a user might feel can be reduced.

After a driving signal is sent to the light deflector 13, the control device 11 that has started the light-source intensity detection (S4) sends to the light source 12 a control signal that serves as instructions to emit light for light-intensity detection. The light source 12 that has received this control signal calculates the timing at which the light will be received by the light receiver 18 momentarily switches on the light source 12. In parallel with that, the control device 11 calculates the light-source intensity of the light source 12 based on the light signal sent from the light receiver 18.

The control device 11 that has done such light-intensity detection as above increase the count value by 1 (step S5), and then determines whether the calculated light-source intensity exceeds an upper limit (step S6). When the value of the light-source intensity does not exceed an upper limit ("N" in S6), after the environmental luminosity is detected based on, for example, the output from a luminosity sensor (step S7), the light intensity is adjusted (step S8). Subsequently, a series of flow of processes is terminated.

In the light-quantity adjustment (S8), the light-source intensity is adjusted based on a result of detecting the environmental luminosity and a result of the light-source intensity detection. In so doing, when the first dimmer 61a of the light-intensity adjustable member 61 needs to be disposed in the optical path, the light-intensity adjustable member 61 is moved away from the HP as the screw motor 64 is driven in inverse direction. When the intensity of light emission by the light source is to be adjusted in a delicate manner, such fine adjustments may be performed.

Once a detection signal is sent from the home position (HP) sensor 65 to the control device 11 after the system startup, the control device 11 counts the cumulative number of normal rotations and the cumulative number of inverse rotations of the screw motor 64 until the power is switched off. By adding up the cumulative number of normal rotations and the cumulative number of inverse rotations, the current position of the light-intensity adjustable member 61 can be detected.

When the value of the light-source intensity exceeds an upper limit in the above processing step S6, the control device 11 determines whether the count value is greater than 1 (step S9). When the count value is not greater than 1 (N in S9), it is determined that the value of the light-source intensity has exceeded an upper limit in the first result of the light-intensity detection after the system startup. In this configuration, the control device 11 performs the light-source intensity detection (S4) again after the light source is reset (step S10). In the light-source resetting process (step S10), the power supply to the light source 12 is terminated once and then is started again.

When the value of the light-source intensity exceeds an upper limit even after the light source is reset (step S10), the count value becomes greater than 1 (Y in S9) in the determining processes in the step S9. In such cases, there is a high probability that some sort of abnormality is caused. Accordingly, after a light-intensity abnormality flag (step S11) is set, the control device 11 stops the light source 12 (step S12) and terminates a series of flow of processes.

When a light-intensity abnormality flag is set, the control device 11 gives the highest priority to an interruption that notifies a user of an error. Accordingly, the user is notified of an abnormality, and is prompted to perform maintenance and inspection.

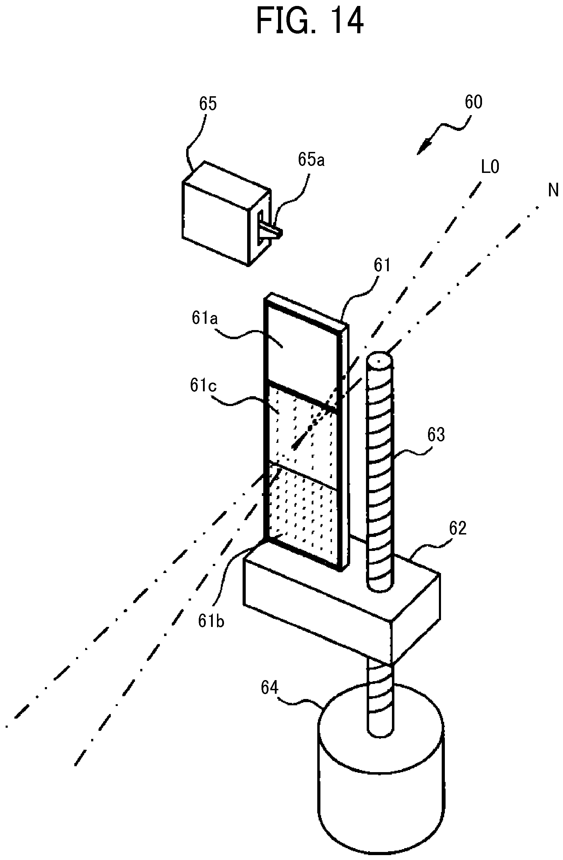

In the present embodiment, an example case is described in which the light-intensity adjustable member 61 is provided with two transmissive areas including the first dimmer 61a and the second dimmer 61b whose transmittance is different from each other. However, as illustrated in FIG. 14, three or more transmissive areas (including the first dimmer 61a, the second dimmer 61b, and a third dimmer 61c) whose transmittance is different from each other may be provided.

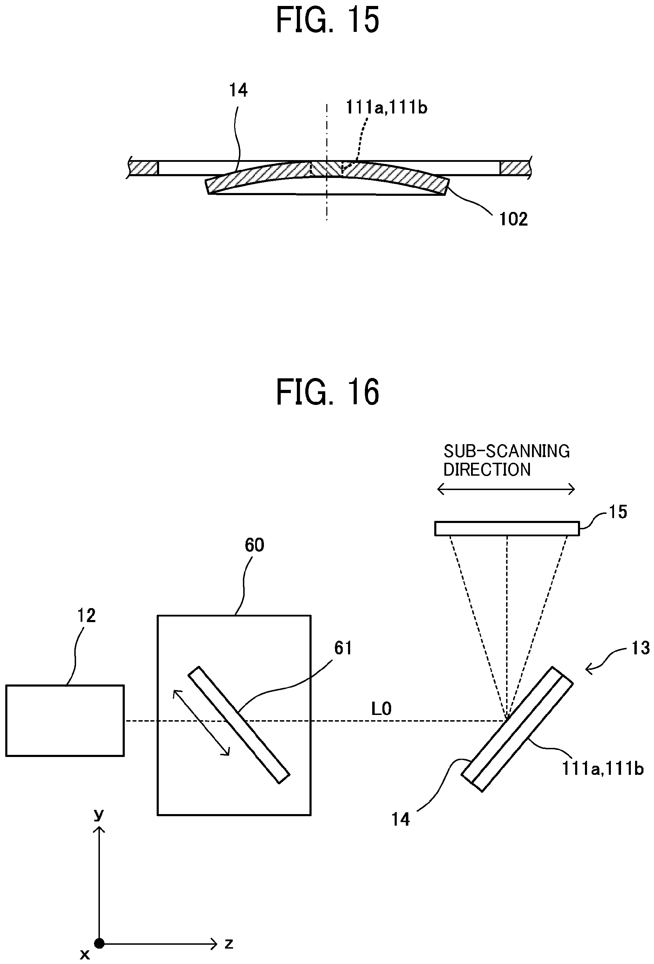

A method of reducing the astigmatic difference caused to the light deflected by the light deflector 13 due to astigmatism is described below. For example, the shape of the reflection plane 14 that deflects light may deviate from a desirable planar shape due to the influence or error made in the manufacturing process of the light deflector 13. As a result, astigmatism may occur in the deflected light. As described above, for example, the MEMS device that configures the light deflector 13 according to the present embodiment is formed by etching a silicon on insulator (SOI) substrate. The internal stress that is caused in the forming process or polishing process is left in the silicon on insulator (SOI) substrate that is the base material of the reflection plane 14, and when the rear side of the substrate is etched and the internal stress is released, the internal stress differs between the front side and rear side of the SOI substrate. As a result, as illustrated in FIG. 15, the mirror-unit base 102 is curved to have a central axis of curvature parallel to the first axis, and the reflection plane 14 on the mirror-unit base 102 is curved in a convex shape. In other words, the reflection plane 14 on the mirror-unit base 102 is curved such that the direction of tangent changes in the main scanning direction. In the following description, such curvature may be referred to as the curvature in the main scanning direction.

When the reflection plane 14 is curved as described above, the reflection plane 14 that is expected to serve as a plane mirror under normal circumstances serves as a convex mirror. Due to this configuration, the image-forming position (i.e., the focal point) of the light, which is deflected by the reflection plane 14, in the main scanning direction shifts in the optical-axis direction. The radius of curvature of the curvature caused in the main scanning direction is about 50 to 100 millimeters (mm), and in such cases, the focal point ends up being displaced on the target surface 15, which is a target focal point, by several millimeters.

By contrast, regarding the curvature with a central axis of curvature parallel to the second axis orthogonal to the first axis (i.e., the curvature where the direction of tangent changes in the sub-scanning direction), both ends of the mirror-unit base 102 in the first-axis direction are supported by the torsion bars 111a and 111b, and thus the degree of curvature is not greater than the curvature in the main scanning direction. Accordingly, the image-forming position (i.e., the focal point) of the light deflected by the reflection plane 14 in the sub-scanning direction does not shift as much as the image-forming position in the main scanning direction.

For this reason, for example, when adjustment is performed so as to focus on the target surface 15 in the main scanning direction, the focal point in the sub-scanning direction is displaced to a front side compared with the focal point on the target surface 15 in the main scanning direction, and astigmatism occurs. Moreover, for example, the length of beam spot on the target surface 15 in the sub-scanning direction expands due to the astigmatic difference, i.e., the amount of displacement between the focal point in the main scanning direction and the focal point in the sub-scanning direction, and random noise or the like may occur and the quality of a projected image may deteriorate, which is undesirable.

In order to handle such a situation, as illustrated in FIG. 11 and FIG. 12, the light-intensity adjustable member 61 according to the present invention that serves as a planar light transmission member, which is provided for the light-intensity adjuster 60 disposed in the optical path between the light source 12 and the light deflector 13, is inclined with reference to the optical-axis direction of the optical path. In other words, as illustrated in FIG. 11 and FIG. 12, the light-intensity adjustable member 61 is disposed in such a manner that the normal line N of the planar face is inclined with reference to the optical axis LO of the optical path.

FIG. 16 is a diagram illustrating an inclined direction of the light-intensity adjustable member 61, according to the present invention.

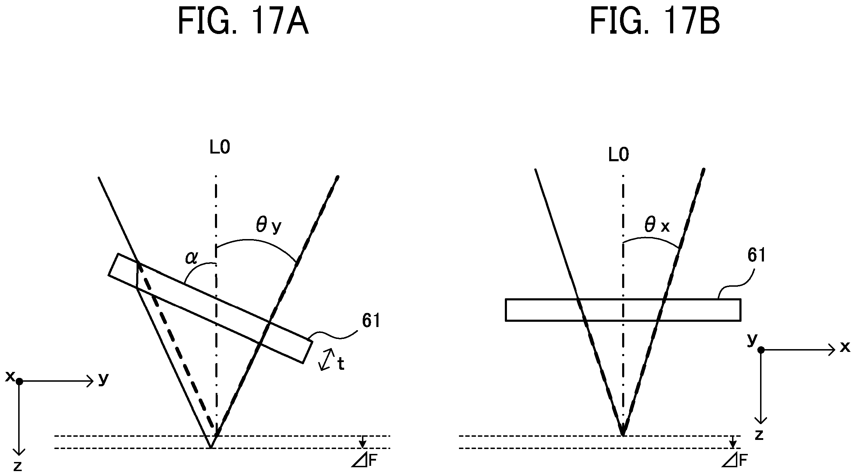

FIG. 17A and FIG. 17B are diagrams illustrating how an astigmatic difference is corrected by inclining the light-intensity adjustable member 61, according to the present invention.

FIG. 17A is a diagram illustrating a sectional view of the light-intensity adjustable member 61 along a cross section perpendicular to the main scanning direction (i.e., the x-direction), according to the present invention.

FIG. 17B is a diagram illustrating a sectional view of the light-intensity adjustable member 61 along a cross section perpendicular to the sub-scanning direction (i.e., the y-direction), according to the present invention.

In the xyz three-dimensional rectangular coordinate system as illustrated in FIG. 16, FIG. 17A, and FIG. 17B, the optical-axis direction of the light that passes through the light-intensity adjustable member 61, the direction corresponding to the main scanning direction on the light-intensity adjustable member 61, and the direction corresponding to the sub-scanning direction on the light-intensity adjustable member 61 are referred to as the z-direction, the x-direction, and the y-direction, respectively.

In the present embodiment, as described above, the reflection plane 14 is curved in the direction corresponding to the main scanning direction (the reflection plane 14 is curved such that the direction of tangent changes in the main scanning direction). However, the reflection plane 14 is almost not at all curved in the direction corresponding to the sub-scanning direction (the reflection plane 14 is not curved such that the direction of tangent changes in the sub-scanning direction). For this reason, the focal point of the light, which is deflected by the reflection plane 14, in the sub-scanning direction is displaced to a front side with reference to the focal point in the main scanning direction, and an astigmatic difference is caused. For the purposes of reducing such an astigmatic difference, the focal point in the sub-scanning direction may be shifted to a remote point, or the focal point in the main scanning direction may be shifted to a closer point.

In the present embodiment, the light that is emitted from the light source 12 to the reflection plane 14 of light deflector 13 is converging light. For this reason, when the light-intensity adjustable member 61 is inclined as illustrated in FIG. 17A, the focal point is shifted to a remote point. In other words, the light-intensity adjustable member 61 is rotated on the axis parallel to the main scanning direction (i.e., the x-direction) such that the N of the planar face is inclined with reference to the optical axis LO of the optical path. Due to this configuration, the optical paths of multiple bundles of laser beams in the sub-scanning direction (i.e., the y-direction) relatively change, and the focal point in the sub-scanning direction (i.e., the y-direction) can be shifted to a remote point.

On the other hand, as illustrated in FIG. 17B, the optical paths of multiple bundles of laser beams in a direction (i.e., the main scanning direction: the x-direction) orthogonal to both the sub-scanning direction (i.e., the y-direction) and the optical-axis LO direction of the optical path do not relatively change. Accordingly, the focal point in the main scanning direction remains unchanged. As a result, the amount of displacements in focal point in the sub-scanning direction (i.e., the y-direction) and the main scanning direction (i.e., the x-direction), i.e., the astigmatic difference, can be reduced.

In order to handle such a situation, in the present embodiment, as illustrated in FIG. 16, FIG. 17A, and FIG. 17B, the light-intensity adjustable member 61 is inclined as the light-intensity adjustable member 61 is rotated on an axis in the direction (i.e., the x-direction) orthogonal to the optical axis LO of the light emitted from the light source and the axis of the torsion bars 111a and 111b (in the sub-scanning direction, i.e., the y-direction). Due to this configuration, as illustrated in FIG. 17A, the focal point in the sub-scanning direction (i.e., the y-direction) can be shifted to a remote point, and the amount of displacement (astigmatic difference) ΔF from the focal point in the main scanning direction (i.e., the x-direction) can be reduced.

In the present embodiment, the light-intensity adjustable member 61 is formed by evaporating an optical thin film such as a dielectric film onto the surface of a glass substrate. As known in the art, the film is designed according to the tilt angle α of the flat face of the light-intensity adjustable member 61 with reference to the optical axis LO. In the case of the light-intensity adjustable member 61 that serves as a planar light transmission member, the astigmatic difference ΔF can be calculated from the thickness t of the light-intensity adjustable member 61, a tilt angle α, an incident convergent angle θx of the light in the main scanning direction, and an incident convergent angle θy of the light in the sub-scanning direction. Due to this configuration, when the incident convergent angles θx and θy and the thickness t of the light-intensity adjustable member 61 are defined, firstly, the focal point in the main scanning direction is adjusted so as to match a desired position (on the target surface 15), and then the tilt angle α is adjusted. By so doing, the astigmatic difference due to the curvature of the reflection plane 14 can be cancelled.

When the thickness t of the light-intensity adjustable member 61 is not yet defined, for example, the tilt angle α may be adjusted upon adjusting the focal point in the main scanning direction so as to match a desired position (on the target surface 15), and the thickness t of the light-intensity adjustable member 61 may be determined such that the focal point in the sub-scanning direction matches a desired position (on the target surface 15). By so doing, the astigmatic difference due to the curvature of the reflection plane 14 can be cancelled.

For example, the astigmatic difference due to the curvature of the reflection plane 14, i.e., the displacements between the focal point in the main scanning direction and the focal point in the sub-scanning direction, may be corrected by using a cylindrical lens that has curvature in one of the main scanning direction and the sub-scanning direction. However, as will be described later in detail, when a plurality of light sources with different wavelengths are used, a lens with varying curvature needs to be provided for each of the light sources. In the present embodiment, the single light-intensity adjustable member 61 is inclined such that the astigmatic difference due to the curvature of the reflection plane 14 is reduced. Accordingly, the astigmatic difference can be reduced at lower cost.

### Modification

An example of the optical scanner 10 is described below. In the first embodiment as described above, the light-intensity adjustable member 61 provided for the light-intensity adjuster 60 disposed between the light source 12 and the light deflector 13 is inclined with reference to the optical-axis direction of the optical path such that the astigmatic difference is reduced. By contrast, in the present modification, an optical-path combining member installed in the light source 12 is inclined with reference to the optical-axis direction of the optical path such that the astigmatic difference is reduced.

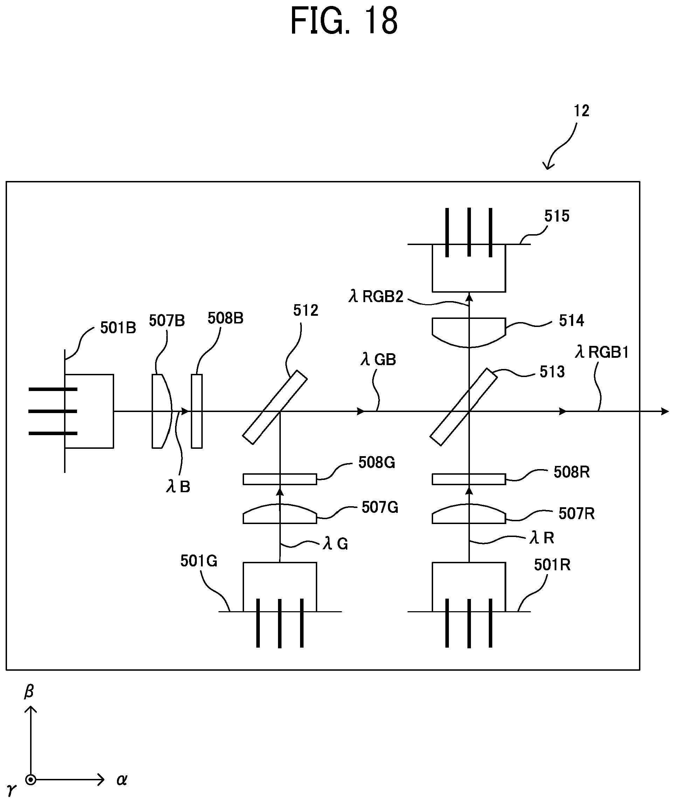

FIG. 18 is a schematic diagram illustrating a configuration of the light source 12 according to an example.

In the following description, an αβγ three-dimensional rectangular coordinate system as illustrated in FIG. 18 is referred to where appropriate. As illustrated in FIG. 18, the light source 12 is provided with, for example, a plurality of (for example, three) laser beam sources 501R, 501B, and 501G each of which serves as a light emitting elements with a single or a plurality of light-emitting points, a plurality of (for example, three) coupling lenses 507R, 507G, and 507B, a plurality of (for example, three) apertures 508R, 508G, and 508B, two optical-path combiners 512 and 513, a condenser lens 116, and a photodetector 515.

Each of the laser beam sources 501R, 501B, and 501G is, for example, a laser diode (LD), and the laser beam sources emit light flux having different wavelengths λR, λG, and λB, respectively. For example, the wavelengths λR, λG, and λB are 640 nanometers (nm), 530 nm, and 445 nm, respectively. In the present modification, the laser beam sources 501R and 501G emit laser beams in a +β direction, and the laser beam source 501B emits laser beams in a +α direction. Each of the laser beam sources 501R, 501B, and 501G is driven through the light-source driver 25 provided for the control device 11.

The bundles of laser beams that are emitted from the laser beam sources 501R, 501G, and 501B with the wavelengths λR, λG, and λB, respectively, pass through the corresponding coupling lenses 507R, 507G, and 507B to be coupled to the subsequent optical system. The coupled bundles of laser beams are shaped by the corresponding apertures 508R, 508G, and 508B. The shape of the apertures 508R, 508G, and 508B may be various kinds of shape such as a circle, an ellipse, a rectangle, and a square depending on, for example, the divergence angle of the bundles of laser beams.

The bundles of laser beams with the wavelengths λB and λG pass through the apertures 508B and 508G, respectively, are combined by the optical-path combiner 512 (for example, a dichroic mirror). More specifically, the bundle of laser beams with the wavelength λB that have passed through the aperture 508B passes through the center of the optical-path combiner 512 in a +α direction, and the bundle of laser beams with the wavelength λG that have passed through the aperture 508G is reflected at the center of the optical-path combiner 512 in a +α direction.

Then, the combined bundle of laser beams λBG, which is obtained by combining the bundle of laser beams of the wavelength λB with the bundle of laser beams of the wavelength λG, is combined with the bundle of laser beams of the wavelength λR that has passed through the aperture 508R, by an optical-path combiner 513 (for example, a dichroic mirror). More specifically, some of the combined bundle of laser beams λBG is transmitted through the center of the optical-path combiner 513 in the +α direction, and the rest of the combined bundle of laser beams λBG is reflected by the center of the optical-path combiner 513 in the +β direction. Some of the bundle of laser beams with the wavelength λR that has passed through the aperture 508R is reflected by the center of the optical-path combiner 513 in the +α direction, and the rest of the bundle of laser beams with the wavelength λR is transmitted through the center of the optical-path combiner 513 in the +β direction. In other words, a combined bundle of laser beams λRGB1, which is obtained by combining some of the combined bundle of laser beams λBG with some of the bundle of laser beams λR,is emitted from the optical-path combiner 513 in the +α direction, and a combined bundle of laser beams λRGB2, which is obtained by combining the rest of the combined bundle of laser beams λBG with the rest of the bundle of laser beams λR, is emitted from the optical-path combiner 513 in the +β direction.

The light deflector 13 is irradiated with the combined bundle of laser beams λRGB1 and the combined bundle of laser beams λRGB1 is used for forming an image on the target surface 15. For example, a meniscus lens that has a concave surface on the light deflector 13 side may be disposed between the optical-path combiner 513 and the light deflector 13. In the present modification of the first embodiment, the optical-path combiner 512 and 513 are described as two separate elements. However, no limitation is indicated thereby, and the optical-path combiner 512 and 513 may be combined together.

The photodetector 515 is irradiated with the combined bundle of laser beams λRGB2 that has passed through a condenser lens 514, and the combined bundle of laser beams λRGB2 is used by a monitor of the radiation intensity of incident light, through which the color or brightness of an image is adjusted. More specifically, the photodetector 515 is used in place of the above light receiver 18 or used together with the above light receiver 18. For example, a photodiode (PD) or a phototransistor may be used as the photodetector 515. The photodetector 515 outputs a signal to the FPGA 23 of the control device 11 according to the light intensity of the received combined bundle of laser beams λRGB2 The FPGA 23 sets the power of light emission (optical output) of each of the laser beam sources 501R, 501G, and 501B based on the signals output from the photodetector 515, such that the light intensity of the combined bundle of laser beams λRGB1 will be a desired level of light intensity and the proportions of light intensity of RGB of the combined bundle of laser beams λRGB1 will correspond to the colors to be displayed, and sends the set value to the light-source driver 25. The light-source driver 25 applies to the laser beam sources 501R, 501G, and 501B the driving current that corresponds to the value of the power of light emission that is set for each of the laser beam sources.

As illustrated in FIG. 18, the optical-path length between each of the laser beam sources 501R, 501G, and 501B to the optical-path combiner 513 is different from each other. More specifically, the optical-path length between the laser beam source 501B and the optical-path combiner 513 is the longest, and the optical-path length between the laser beam source 501R and the optical-path combiner 513 is the shortest. This is because a great amount of red light and a small amount of blue light are used to form a white color on an image where a combination ratio of RGB (red, green, and blue) is approximately 2.5:1:0.5. This configuration prevents a reduction in utilization efficiency of light of the laser beam source.

In the present modification, the optical-path combiner 513 that serves as a planar light transmission member is inclined with reference to the optical-axis direction of the optical path between the light source and the light deflector 13. In other words, as illustrated in FIG. 18, the light-intensity adjustable member 61 (the optical-path combiner 513) is disposed in such a manner that the normal line N of the planar face is inclined with reference to the optical axis LO of the optical path. Even in the present modification where the optical-path combiner 513 is used as described above, the focal point in the sub-scanning direction or the main scanning direction can be shifted to reduce the astigmatic difference ΔF that is caused to the light deflected by the light deflector 13 due to astigmatism.

### Second Embodiment

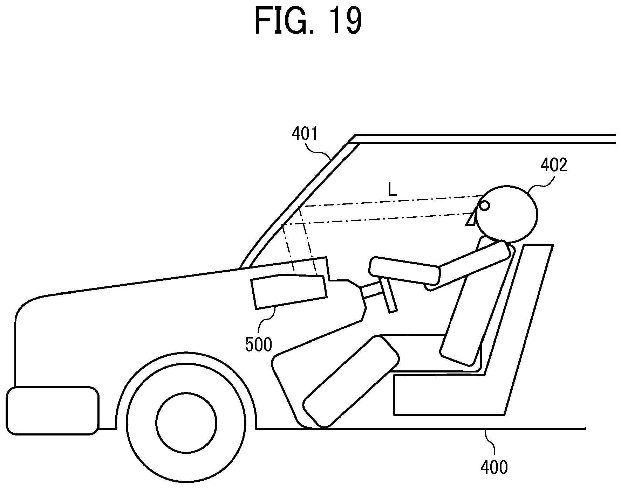

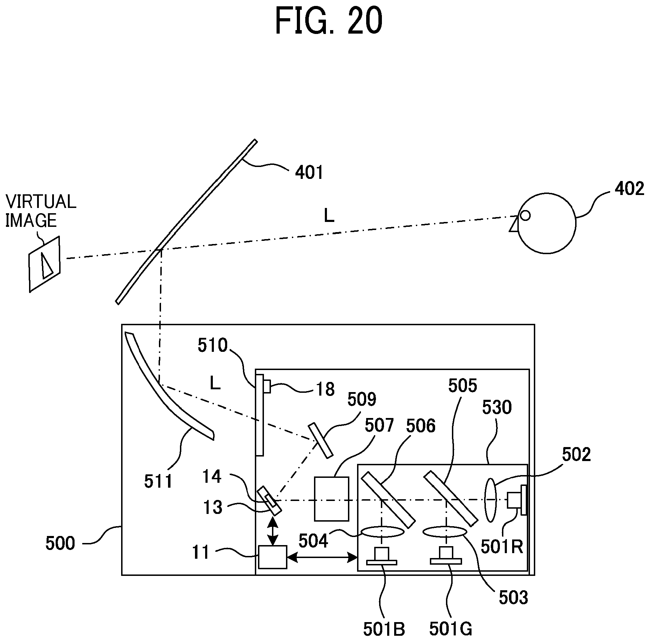

An image projection apparatus provided with the optical scanner 10 according to the first embodiment is applied is described below in detail with reference to FIG. 19 and FIG. 20. The image projection apparatus is an apparatus that performs optical scanning to project an image, and is, for example, a heads-up display (HUD).

FIG. 19 is a diagram illustrating a vehicle 400 provided with a heads-up display 500 that serves as an image projection apparatus, according to a second embodiment.

FIG. 20 is a schematic diagram illustrating a configuration of the heads-up display 500 according to the present embodiment.

As illustrated in FIG. 19, for example, the heads-up display 500 is provided near a front windshield such as a front windshield 401 of the vehicle 400. The projection light L that is emitted from the heads-up display 500 is reflected by the front windshield 401, and is headed for a user. In the present embodiment, the user is also referred to a viewer or a driver 402. Accordingly, the driver 402 can visually recognize an image or the like projected by the heads-up display 500 as a virtual image. Note that a combiner may be disposed on the inner wall of the front windshield, and the user may visually recognize a virtual image formed by the projection light L that is reflected by the combiner.

As illustrated in FIG. 20, the heads-up display 500 emits laser beams from red, green, and blue laser beam sources 501R, 501G, and 501B, respectively. The emitted laser beam passes through an incident optical system and is then deflected by the light deflector 13 having the reflection plane 14. The incident optical system includes collimator lenses 502, 503, and 504, which are provided for the respective laser beam sources, two dichroic mirrors 505 and 506, and a light-intensity adjuster 507.

The deflected laser beam passes through a free-form surface mirror 509, an intermediate screen 510, and a projection optical system consisting of a projection mirror 511, and then is projected. The light receiver 18 is provided for the intermediate screen 510, and the optical scanner 10 is adjusted using a light signal obtained by the light receiver 18.

In the heads-up display 500, the lasers 501R, 501G, and 501B, the collimator lenses 502, 503, and 504, and the dichroic mirrors 505 and 506 are unitized as a light source unit 530 in an optical housing.

The heads-up display 500 projects an intermediate image that is displayed on the intermediate screen 510, on the front windshield 401 of the vehicle 400, thereby allowing the driver 402 to visually recognize the intermediate image as a virtual image.

The laser beams of the respective colors emitted from the laser beam sources 501R, 501G, and 501B are approximately collimated by the collimator lenses 502, 503, and 504 and are combined by the two dichroic mirrors 505 and 506. The light intensity of the combined laser beams is adjusted by the light-intensity adjuster 60, and then two-dimensional scanning is performed by the light deflector 13 provided with the reflection plane 14. The projection light L that has been two-dimensionally scanned by the light deflector 13 is reflected by the free-form surface mirror 509 so as to correct the distortion, and then is concentrated onto the intermediate screen 510. Accordingly, an intermediate image is displayed. The intermediate screen 510 is constituted by a microlens array in which a plurality of microlenses are two-dimensionally arranged, and expands the projected light L incident on the intermediate screen 510 in units of microlens.

The light deflector 13 moves the reflection plane 14 biaxially in a reciprocating manner to perform two-dimensional scanning by using the projected light L incident on the reflection plane 14. The driving of the light deflector 13 is controlled in synchronization with the light-emitting timing of the laser beam sources 501R, 501G, and 501B.

In the above description, the heads-up display 500 is described as an example of the image projection apparatus. However, no limitation is indicated thereby, and the image projection apparatus may be any apparatus that performs optical scanning, using the light deflector 13 provided with the reflection plane 14, to project an image.

For example, the present disclosure is also applicable to a projector that projects an image on a display screen, a head-mounted display that is incorporated in a wearable member on the head of the observer, for example, and that projects an image on a reflective-and-transmissive screen of the wearable member or on an eye ball as a screen, and the like.

The image projection apparatus may be incorporated in, not only a vehicle or the wearable member, but also, for example, a mobile object such as an aircraft, a ship, or a moving robot, and an immobile object such as an operation robot that operates a driving target such as a manipulator without moving from the installed location.

### Third Embodiment

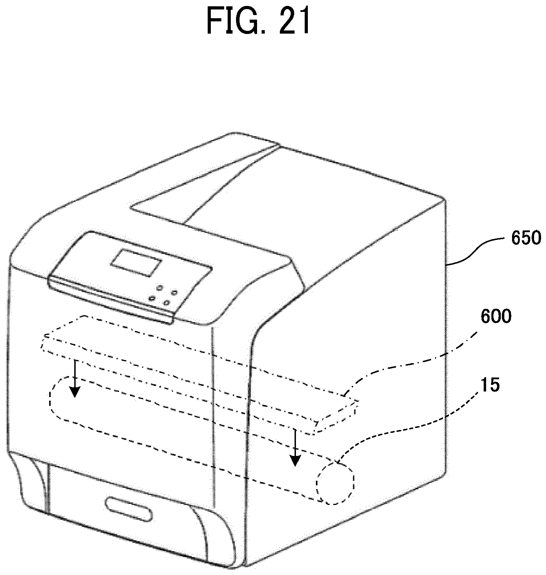

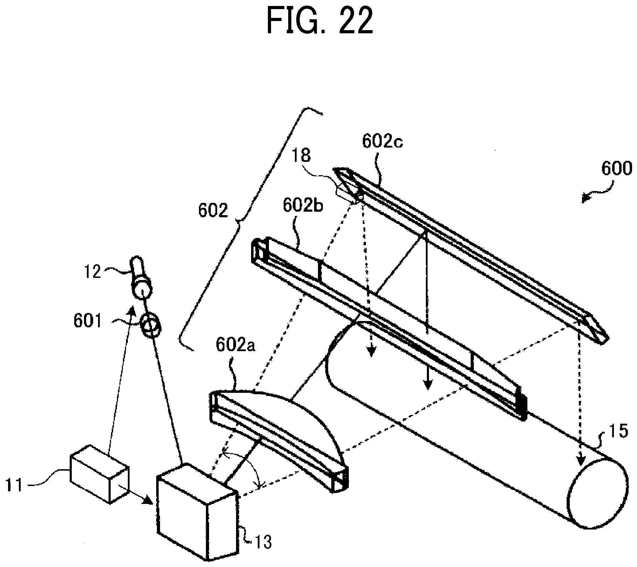

An optical writing device provided with the optical scanner 10 according to the first embodiment is applied is described below in detail with reference to FIG. 21 and FIG. 22.

FIG. 21 is a diagram illustrating an image forming apparatus provided with an optical writing device 600, according to a third embodiment of the present disclosure.

FIG. 22 is a schematic diagram illustrating a configuration of the optical writing device 600, according to the third embodiment.

As illustrated in FIG. 21, the optical writing device 600 is used as a component of an image forming apparatus typified by a laser-beam printer 650 or the like. The laser-beam printer 650 serves as a printer that uses laser beams, and the optical writing device 600 in the image forming apparatus performs optical scanning on a photoconductor drum, which is the target surface 15, by using one or more laser beams, thereby performing optical writing on the photoconductor drum.

As illustrated in FIG. 22, in the optical writing device 600, the laser beam from the light source 12 such as a laser element passes through an image forming optical system 601 such as a collimator lens and is then deflected uniaxially or biaxially by the light deflector 13 having the reflection plane 14.

The laser beam deflected by the light deflector 13 passes through a scanning optical system 602 constituted by a first lens 602a, a second lens 602b, and a reflecting mirror unit 602c, and is emitted onto the target surface 15 (e.g., a photoconductor drum or photosensitive paper), and thereby optical writing is performed. The scanning optical system 602 forms a laser beam in the form of a spot on the target surface 15. In this configuration, the light receiver 18 is provided in the scanning optical system 602, which also serves as a surface to be scanned by the light deflector 13.

As described above, the optical writing device 600 can be used as a component of the image forming apparatus that serves as a printer using laser beams.

Moreover, the optical writing device 600 can also be used as a component of an image forming apparatus such as a laser label apparatus that deflects laser beam to perform optical scanning on thermal media and print letters by heating.

The light deflector 13 having the reflection plane 14 to be applied to the optical writing device is advantageous in saving power of the optical writing device because power consumption for driving the light deflector 13 is less than that for driving a polygon mirror or the like.

The light deflector 13 makes a smaller wind noise when the mirror substrate oscillates compared with a polygon mirror, and thus is advantageous in achieving low noise of an optical writing device. The optical writing device requires much smaller footprint than that of a polygon mirror, and the amount of heat generated by the light deflector 13 is small. Accordingly, downsizing is easily achieved, and thus the optical writing device is advantageous in downsizing the image forming apparatus.

### Fourth Embodiment

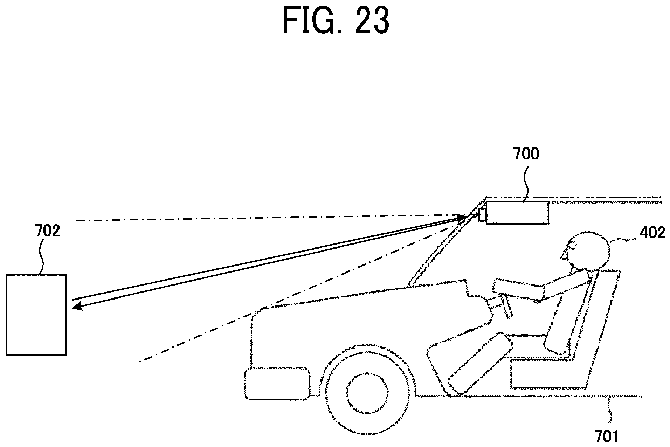

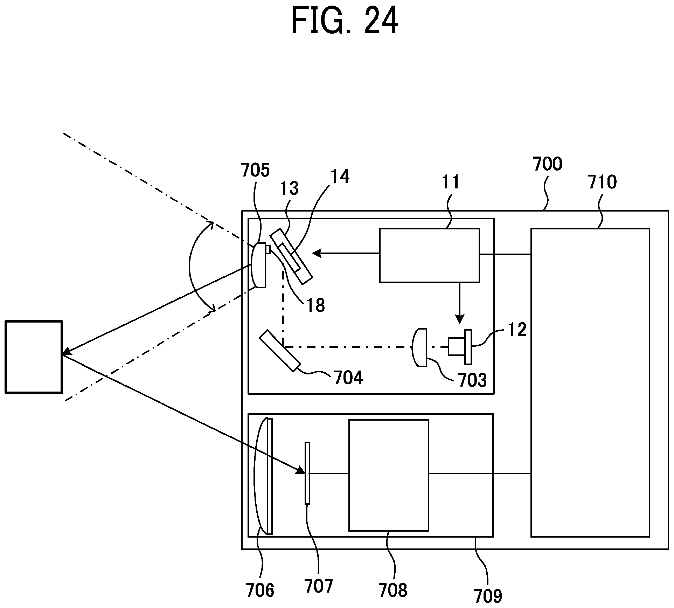

An object recognition device provided with the optical scanner 10 according to the first embodiment is described below in detail with reference to FIG. 23 and FIG. 24. The object recognition device is an apparatus that recognizes an object in a target direction, and is, for example, a LiDAR device.

FIG. 23 is a schematic diagram illustrating a vehicle provided with a LiDAR device that serves as an object recognition device, according to the present embodiment.

FIG. 24 is a schematic diagram illustrating a configuration of a LiDAR device according to the present embodiment.

As illustrated in FIG. 23, for example, a LiDAR device 700 is provided for a vehicle 701 to perform optical scanning in a target direction and receive the light reflected from an object 702 that exists in the target direction. Accordingly, the object 702 can be recognized by the LiDAR device 700.

As illustrated in FIG. 24, the laser beam that is emitted from the light source 12 passes through an incident optical system constituted by a collimator lens 703, which is an optical system approximately collimating diverging light, and a plane mirror 704, and then is uniaxially or biaxially scanned by the light deflector 13 provided with the reflection plane 14. Then, the laser beam is emitted to the object 702 ahead of the vehicle 701, as passing through, for example, a projection lens 705 that serves as a projection optical system. The light receiver 18 is provided for the projection lens 705 that also serves as to-be-scanned surface.

The light that is reflected by the object 702 is detected by a photodetector 709. More specifically, the reflected light passes through, for example, a condenser lens 706 that serves as a light-receptive optical system, and is received by an image sensor 707. Then, the image sensor 707 outputs a detected signal to a signal processing circuit 708. The signal processing circuit 708 performs predetermined processing on the input detected signal, such as binarization or noise processing, and outputs the result to a distance measuring circuit 710.

The distance measuring circuit 710 determines whether the object 702 is present based on the time difference between the timing at which the light source 12 emits laser beam and the timing at which the photodetector 709 receives the laser beam or the phase difference among pixels of the image sensor 707 that receives light, and calculates the distance to the object 702.

The light deflector 13 that is provided with the reflection plane 14 cannot easily be broken and is compact compared with a polygon mirror, and thus, a highly durable and compact LiDAR device can be provided.

Such a LiDAR device is attached to, for example, a vehicle, an aircraft, a ship, a robot, or the like, and can perform optical scanning within a predetermined range to determine whether an obstacle is present or to recognize the distance to the obstacle.

In the present embodiment, the LiDAR device 700 is described as an example of the object recognition device. However, no limitation is intended thereby. The object recognition device may be any apparatus that performs optical scanning by controlling the light deflector 13 provided with the reflection plane 14, using the control device 11, and that receives the receives the reflected laser beam using a photodetector to recognize the object 702.

For example, the present disclosure is also applicable to a biometric authentication apparatus, a security sensor, or a component of a three-dimensional scanner, for example. The biometric authentication apparatus performs optical scanning on a hand or face to obtain distance information, calculates object information such as the shape of the object based on the distance information, and refers to records to recognize the object. The security sensor performs optical scanning in a target range to recognize an incoming object. The three-dimensional scanner performs optical scanning to obtain distance information, calculates object information such as the shape of the object based on the distance information to recognize the object, and outputs the object information in the form of three-dimensional data.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

The embodiments described above are given as an example, and unique advantageous effects are achieved for each of the first to eleventh modes given below.

### First Mode

According to a first mode, the optical scanner 10 deflects light emitted from the light source (for example, the laser beam sources 501R, 501G, and 501B) to scan a target scanning area (for example, the target surface 15). The optical scanner 10 includes a light deflector (for example, the light deflector 13) that deflects light emitted from the light source, and a planar light transmission member (for example, the light-intensity adjustable member 61) disposed in the optical path between the light source and the light deflector. The planar light transmission member is inclined with reference to an optical-axis direction L0 of the optical path so as to reduce an astigmatic difference ΔF caused to the light deflected by the light deflector due to astigmatism. For example, the shape of the reflection plane that deflects light may deviate from a desired planar shape due to the influence (e.g., stress) or error made in the manufacturing process of the light deflector. As a result, astigmatism may occur in the deflected light. In the present mode, a planar light transmission member disposed in the optical path between the light source and the light deflector is inclined with reference to the optical-axis direction of the optical path. Due to such a configuration, the astigmatic difference caused to the light deflected by the light deflector due to astigmatism can be reduced. When the planar light transmission member is rotated on a rotation axis orthogonal to the optical-axis direction of the optical path such that the planar light transmission member is inclined with reference to the optical-axis direction of the optical path, the optical paths of multiple bundles of laser beams in a direction (correcting direction) orthogonal to both the rotation-axis direction and the optical-axis direction relatively change, and the focal point in the correcting direction can be changed. On the other hand, the optical paths of multiple bundles of laser beams in a direction (non-correcting direction) parallel to the rotation axis do not relatively change, and thus the focal point in the non-correcting direction does not change. As a result, the astigmatic difference (i.e., the amount of displacement between those focal points) due to the astigmatism caused by the difference between the focal point in the correcting direction and the focal point in the non-correcting direction can be reduced. Accordingly, the astigmatism caused to the light deflected by the light deflector can be reduced.

### Second Mode

According to a second mode, the planar light transmission member in the first mode is the light-intensity adjustable member 61 that adjusts intensity of transmission light of the light emitted from the light source. According to the present mode, the astigmatism caused to the light deflected by the light deflector can be reduced using known the light-intensity adjustable member.

### Third Mode

According to a third mode, the planar light transmission member in the first mode is an optical-path combiner (for example, a dichroic mirror). According to the present mode, the astigmatism caused to the light deflected by the light deflector can be reduced using the known optical-path combiner.

### Fourth Mode

According to a fourth mode, in any one of the first to third modes the light deflector rotates a reflection mirror (for example, the mirror unit 101) whose axis is supported by at least one of the torsion bars 111a and 111b on an axis of the corresponding torsion bar to deflect the light. With the light deflector according to the present mode, even when the curvature in the first direction orthogonal to the axial direction of the torsion bars 111a and 111b (i.e., the curvature where the direction of tangent changes in the first direction) occurs on the reflection mirror, the curvature in the second direction that is the axial direction of the torsion bars 111a and 111b (i.e., the curvature where the direction of tangent changes in the second direction) does not easily occur as both ends of the reflection mirror in the second direction are supported by the torsion bars 111a and 111b. Accordingly, the degree of curvature in the first direction may differ from the degree of curvature in the second direction, and astigmatism easily occurs. According to the present mode, such astigmatism can be reduced.

### Fifth Mode

According to a fifth mode, the planar light transmission member in the fourth mode rotates on an axis orthogonal to an optical axis LO of the light emitted from the light source and an axis of the torsion bar and is inclined with reference to the optical-axis. According to the present mode, the astigmatism caused to the light deflected by the light deflector can be reduced by rotating a reflection mirror whose axis is supported by at least one of the torsion bars on an axis of the corresponding torsion bar.

### Sixth Mode

According to a sixth mode, the planar light transmission member in any one of the first to fifth modes includes a plurality of transmissive areas (for example, the dimmers 61a, 61b, and 61c), and each of the plurality of transmissive areas (61a, 61b, 61c) has different intensity of transmission light of the light emitted from the light source. Further, a transmission-light intensity adjuster (for example, the feed screw 63 and the screw motor 64) is involved that moves the planar light transmission member in a direction parallel to a flat face of the planar light transmission member so as to adjust the transmissive areas disposed in the optical path. According to the present mode, even when the astigmatism caused to the light deflected by the light deflector is to be reduce using the planar light transmission member where the transmissive areas existing in the optical path are switched, the planar light transmission member the switching among the transmissive areas is not disturbed.

### Seventh Mode

According to a seventh mode, an image projection apparatus (e.g., the heads-up display 500) scans a target scanning area, using the light that is modulated based on image data, to project an image. The image projection apparatus includes the optical scanner 10 according to any one of the first to fifth modes, and a projection optical system (e.g., the projection mirror 511) that projects the light emitted from the optical scanner to the target scanning area. According to the seventh mode, an image with reduced astigmatism can be projected.

### Eighth Mode

According to an eighth mode, a mobile object (e.g., the vehicle 400 or 701) includes the optical scanner 10 according to any one of the first to sixth modes or the image projection apparatus according to the seventh mode. According to the eighth mode, a mobile object that can perform optical scanning with reduced astigmatism is implemented.

### Ninth Mode

According to a ninth mode, an optical scanner is manufactured in a method, and the optical scanner deflects the light emitted from a light source to optically scan a target scanning area. In the method, a planar light transmission member disposed in an optical path between the light source and the light deflector is inclined with reference to the optical-axis direction of the optical path so as to reduce the astigmatic difference caused to the light deflected by the light deflector due to astigmatism. According to the present mode, an optical scanner can be manufactured in which the astigmatism caused to the light deflected by the light deflector can be reduced.

### Tenth Mode

According to a tenth mode, a tilt angle α of the planar light transmission member in the ninth mode is set with reference to an optical-axis direction of the optical path so as to reduce an astigmatic difference caused by the astigmatism. According to the present mode, an optical scanner can be manufactured in which the astigmatism caused to the light deflected by the light deflector can further be reduced.

### Eleventh Mode

According to an eleventh mode, thickness of the planar light transmission member in ninth mode is set so as to reduce an astigmatic difference caused by the astigmatism. According to the present mode, an optical scanner can be manufactured in which the astigmatism caused to the light deflected by the light deflector can further be reduced.

## Claims

1. An optical scanner (10) comprising:
a light source (12) configured to emit light;
a light deflector (13) configured to deflect the light emitted from the light source (12); and
a planar light transmission member (61) disposed in an optical path between the light source (12) and the light deflector (13),
wherein the planar light transmission member (61) is inclined with reference to an optical-axis direction of the optical path to reduce an astigmatic difference (ΔF) caused to the light deflected by the light deflector (13) due to astigmatism;
**characterised in that** the planar light transmission member (61) is a light-intensity adjustable member (61) configured to be adjusted to change the intensity of transmission light of the light emitted from the light source (12), wherein the planar light transmission member (61) includes a plurality of transmissive areas (61a, 61b, 61c) configured to be disposed in the optical path, each of the plurality of transmissive areas (61a, 61b, 61c) having different intensity of transmission light of the light emitted from the light source (12); and
the optical scanner (10) further comprises a transmission-light intensity adjuster (63, 64) configured to move the planar light transmission member (61) such that a desired one of the plurality of transmissive areas (61a, 61b, 61c) is placed in the optical path to adjust intensity of transmission light of the light emitted from the light source (12) on receipt of a signal from a control device (11);

2. The optical scanner (10) according to claim 1, wherein the light deflector (13) includes a reflection mirror (101) whose axis is supported by a torsion bar (111a, 111b), and the reflection mirror (101) rotates on an axis of the torsion bar (111a, 111b) to deflect the light.

3. The optical scanner (10) according to claim 2, wherein the planar light transmission member (61) is inclined with reference to an optical axis of the light emitted from the light source (12) by a rotation on an axis orthogonal to the optical axis and an axis of the torsion bar (111a, 111b).

4. The optical scanner (10) according to any one of claims 1 to 3,
wherein the transmission-light intensity adjuster (63, 64) moves the planar light transmission member (61) in a direction parallel to a flat face of the planar light transmission member (61) to adjust the plurality of transmissive areas (61a, 61b, 61c).

5. An image projection apparatus (500) comprising:
the optical scanner (10) according to any one of claims 1 to 4; and
a projection optical system (511) configured to project light emitted from the optical scanner (10) to a target scanning area (15),
wherein the light deflector (13) of the optical scanner (10) scans the target scanning area (15), using light modulated based on image data, to project an image.

6. A mobile object (400, 701) comprising at least one of the optical scanner (10) according to any one of claims 1 to 4 and the image projection apparatus (500) according to claim 5.

7. A method of manufacturing an optical scanner (10), the optical scanner (10) comprising:
a light source (12) configured to emit light;
a light deflector (13) configured to deflect the light emitted from the light source (12); and
a planar light transmission member (61) disposed in an optical path between the light source (12) and the light deflector (13),
wherein the planar light transmission member (61) is inclined with reference to an optical-axis direction of the optical path to reduce an astigmatic difference (ΔF) caused to the light deflected by the light deflector (13) due to astigmatism;
**characterised in that** the planar light transmission member (61) is a light-intensity adjustable member (61) configured to adjust intensity of transmission light of the light emitted from the light source (12)), wherein the planar light transmission member (61) includes a plurality of transmissive areas (61a, 61b, 61c) configured to be disposed in the optical path, each of the plurality of transmissive areas (61a, 61b, 61c) having different intensity of transmission light of the light emitted from the light source (12); and
the optical scanner (10) further comprises a transmission-light intensity adjuster (63, 64) configured to move the planar light transmission member (61) such that a desired one of the plurality of transmissive areas (61a, 61b, 61c) is placed in the optical path to adjust intensity of transmission light of the light emitted from the light source (12) on receipt of a signal from a control device (11).

8. The method according to claim 7, wherein a tilt angle (α) of the planar light transmission member (61) is set with reference to an optical-axis direction of the optical path to reduce an astigmatic difference (ΔF) caused by the astigmatism.

9. The method according to claim 7, wherein thickness of the planar light transmission member (61) is set so as to reduce an astigmatic difference (ΔF) caused by the astigmatism.

## Patentansprüche

1. Optischer Scanner (10), der Folgendes umfasst:
eine Lichtquelle (12), die konfiguriert ist, um Licht zu emittieren;
einen Lichtablenker (13), der konfiguriert ist, um das von der Lichtquelle (12) emittierte Licht abzulenken; und
ein planares Lichttransmissionselement (61), das in einem Strahlengang zwischen der Lichtquelle (12) und dem Lichtablenker (13) angeordnet ist,
wobei das planare Lichttransmissionselement (61) in Bezug auf eine Richtung der optischen Achse des Strahlengangs geneigt ist, um eine astigmatische Differenz (ΔF) zu verringern, die aufgrund von Astigmatismus für das durch den Lichtablenker (13) abgelenkte Licht verursacht wird;
**dadurch gekennzeichnet, dass** das planare Lichttransmissionselement (61) ein in der Lichtintensität einstellbares Element (61) ist, das konfiguriert ist, um eingestellt zu werden, um die Intensität des Transmissionslichts des von der Lichtquelle (12) emittierten Lichts zu ändern, wobei das planare Lichttransmissionselement (61) eine Vielzahl von transmissiven Bereichen (61a, 61b, 61c) umfasst, die konfiguriert sind, um in dem Strahlengang angeordnet zu sein, wobei jeder der Vielzahl von transmissiven Bereichen (61a, 61b, 61c) eine unterschiedliche Intensität des Transmissionslichts des von der Lichtquelle (12) emittierten Lichts aufweist; und
der optische Scanner (10) ferner eine Transmissionslichtintensitätseinstellvorrichtung (63, 64) umfasst, die konfiguriert ist, um das planare Lichttransmissionselement (61) so zu bewegen, dass ein gewünschter der Vielzahl von transmissiven Bereichen (61a, 61b, 61c) in dem Strahlengang platziert wird, um die Intensität des Transmissionslichts des von der Lichtquelle (12) emittierten Lichts bei Empfang eines Signals von einer Steuervorrichtung (11) einzustellen.

2. Optischer Scanner (10) nach Anspruch 1, wobei der Lichtablenker (13) einen Reflexionsspiegel (101) umfasst, dessen Achse von einem Drehstab (111a, 111b) getragen wird, und sich der Reflexionsspiegel (101) um eine Achse des Drehstabs (111a, 111b) dreht, um das Licht abzulenken.

3. Optischer Scanner (10) nach Anspruch 2, wobei das planare Lichttransmissionselement (61) in Bezug auf eine optische Achse des von der Lichtquelle (12) emittierten Lichts durch eine Drehung um eine Achse orthogonal zu der optischen Achse und eine Achse des Drehstabs (111a, 111b) geneigt ist.

4. Optischer Scanner (10) nach einem der Ansprüche 1 bis 3,
wobei die Transmissionslichtintensitätseinstellvorrichtung (63, 64) das planare Lichttransmissionselement (61) in einer Richtung parallel zu einer flachen Fläche des planaren Lichttransmissionselements (61) bewegt, um die Vielzahl von transmissiven Bereichen (61a, 61b, 61c) einzustellen.

5. Bildprojektionsvorrichtung (500), die Folgendes umfasst:
den optischen Scanner (10) nach einem der Ansprüche 1 bis 4; und
ein optisches Projektionssystem (511), das konfiguriert ist, um von dem optischen Scanner (10) emittiertes Licht auf einen Zielabtastbereich (15) zu projizieren,
wobei der Lichtablenker (13) des optischen Scanners (10) den Zielabtastbereich (15) unter Verwendung von auf Basis von Bilddaten moduliertem Licht abtastet, um ein Bild zu projizieren.

6. Mobiles Objekt (400, 701), das mindestens eines des optischen Scanners (10) nach einem der Ansprüche 1 bis 4 und der Bildprojektionsvorrichtung (500) nach Anspruch 5 umfasst.

7. Verfahren zur Herstellung eines optischen Scanners (10), wobei der optische Scanner (10) Folgendes umfasst:
eine Lichtquelle (12), die konfiguriert ist, um Licht zu emittieren;
einen Lichtablenker (13), der konfiguriert ist, um das von der Lichtquelle (12) emittierte Licht abzulenken; und
ein planares Lichttransmissionselement (61), das in einem Strahlengang zwischen der Lichtquelle (12) und dem Lichtablenker (13) angeordnet ist,
wobei das planare Lichttransmissionselement (61) in Bezug auf eine Richtung der optischen Achse des Strahlengangs geneigt ist, um eine astigmatische Differenz (ΔF) zu verringern, die aufgrund von Astigmatismus für das durch den Lichtablenker (13) abgelenkte Licht verursacht wird;
**dadurch gekennzeichnet, dass** das planare Lichttransmissionselement (61) ein in der Lichtintensität einstellbares Element (61) ist, das konfiguriert ist, um die Intensität des Transmissionslichts des von der Lichtquelle (12) emittierten Lichts einzustellen, wobei das planare Lichttransmissionselement (61) eine Vielzahl von transmissiven Bereichen (61a, 61b, 61c) umfasst, die konfiguriert sind, um in dem Strahlengang angeordnet zu sein, wobei jeder der Vielzahl von transmissiven Bereichen (61a, 61b, 61c) eine unterschiedliche Intensität des Transmissionslichts des von der Lichtquelle (12) emittierten Lichts aufweist; und
der optische Scanner (10) ferner eine Transmissionslichtintensitätseinstellvorrichtung (63, 64) umfasst, die konfiguriert ist, um das planare Lichttransmissionselement (61) so zu bewegen, dass ein gewünschter der Vielzahl von transmissiven Bereichen (61a, 61b, 61c) in dem Strahlengang platziert wird, um die Intensität des Transmissionslichts des von der Lichtquelle (12) emittierten Lichts bei Empfang eines Signals von einer Steuervorrichtung (11) einzustellen.

8. Verfahren nach Anspruch 7, wobei ein Neigungswinkel (a) des planaren Lichttransmissionselements (61) in Bezug auf eine Richtung der optischen Achse des Strahlengangs eingestellt wird, um eine durch den Astigmatismus verursachte astigmatische Differenz (ΔF) zu verringern.

9. Verfahren nach Anspruch 7, wobei die Dicke des planaren Lichttransmissionselements (61) so eingestellt wird, dass eine durch den Astigmatismus verursachte astigmatische Differenz (ΔF) verringert wird.

## Revendications

1. Scanneur optique (10) comprenant :
une source de lumière (12) configurée pour émettre de la lumière ;
un déflecteur de lumière (13) configuré pour dévier la lumière émise depuis la source de lumière (12) ; et
un organe de transmission de lumière plan (61) disposé sur un trajet optique entre la source de lumière (12) et le déflecteur de lumière (13),
dans lequel l'organe de transmission de lumière plan (61) est incliné par rapport à une direction d'axe optique du trajet optique pour réduire une différence astigmatique (ΔF) causée à la lumière déviée par le déflecteur de lumière (13) en raison d'un astigmatisme ;
**caractérisé en ce que** l'organe de transmission de lumière plan (61) est un organe à intensité de lumière ajustable (61) configuré pour être ajusté afin de modifier l'intensité de lumière de transmission de la lumière émise depuis la source de lumière (12), dans lequel l'organe de transmission de lumière plan (61) comporte une pluralité de zones transmissives (61a, 61b, 61c) configurées pour être disposées sur le trajet optique, chacune de la pluralité de zones transmissives (61a, 61b, 61c) ayant une intensité différente de lumière de transmission de la lumière émise depuis la source de lumière (12) ; et
le scanneur optique (10) comprend en outre un dispositif d'ajustement d'intensité de lumière de transmission (63, 64) configuré pour déplacer l'organe de transmission de lumière plan (61) de sorte que l'une souhaitée de la pluralité de zones transmissives (61a, 61b, 61c) soit placée sur le trajet optique afin d'ajuster une intensité de lumière de transmission de la lumière émise depuis la source de lumière (12) à la réception d'un signal depuis un dispositif de commande (11).

2. Scanneur optique (10) selon la revendication 1, dans lequel le déflecteur de lumière (13) comporte un miroir de réflexion (101) dont l'axe est supporté par une barre de torsion (111a, 111b), et le miroir de réflexion (101) tourne autour d'un axe de la barre de torsion (111a, 111b) pour dévier la lumière.

3. Scanneur optique (10) selon la revendication 2, dans lequel l'organe de transmission de lumière plan (61) est incliné par rapport à un axe optique de la lumière émise depuis la source de lumière (12) par une rotation sur un axe orthogonal à l'axe optique et d'un axe de la barre de torsion (111a, 111b).

4. Scanneur optique (10) selon l'une quelconque des revendications 1 à 3,
dans lequel le dispositif d'ajustement d'intensité de lumière de transmission (63, 64) déplace l'organe de transmission de lumière plan (61) dans une direction parallèle à une face plate de l'organe de transmission de lumière plan (61) pour ajuster la pluralité de zones transmissives (61a, 61b, 61c).

5. Appareil de projection d'image (500) comprenant :
le scanneur optique (10) selon l'une quelconque des revendications 1 à 4; et
un système optique de projection (511) configuré pour projeter de la lumière émise depuis le scanneur optique (10) vers une zone de balayage cible (15),
dans lequel le déflecteur de lumière (13) du scanneur optique (10) balaye la zone de balayage cible (15), à l'aide d'une lumière modulée sur la base de données d'image, afin de projeter une image.

6. Objet mobile (400, 701) comprenant au moins l'un parmi le scanneur optique (10) selon l'une quelconque des revendications 1 à 4 et l'appareil de projection d'image (500) selon la revendication 5.

7. Procédé de fabrication d'un scanneur optique (10), le scanneur optique (10) comprenant :
une source de lumière (12) configurée pour émettre de la lumière ;
un déflecteur de lumière (13) configuré pour dévier la lumière émise depuis la source de lumière (12) ; et
un organe de transmission de lumière plan (61) disposé sur un trajet optique entre la source de lumière (12) et le déflecteur de lumière (13),
dans lequel l'organe de transmission de lumière plan (61) est incliné par rapport à une direction d'axe optique du trajet optique pour réduire une différence astigmatique (ΔF) causée à la lumière déviée par le déflecteur de lumière (13) en raison d'un astigmatisme ;
**caractérisé en ce que** l'organe de transmission de lumière plan (61) est un organe à intensité de lumière ajustable (61) configuré pour ajuster une intensité de lumière de transmission de la lumière émise depuis la source de lumière (12), dans lequel l'organe de transmission de lumière plan (61) comporte une pluralité de zones transmissives (61a, 61b, 61c) configurées pour être disposées sur le trajet optique, chacune de la pluralité de zones transmissives (61a, 61b, 61c) ayant une intensité différente de lumière de transmission de la lumière émise depuis la source de lumière (12) ; et
le scanneur optique (10) comprend en outre un dispositif d'ajustement d'intensité de lumière de transmission (63, 64) configuré pour déplacer l'organe de transmission de lumière plan (61) de sorte que l'une souhaitée de la pluralité de zones transmissives (61a, 61b, 61c) soit placée sur le trajet optique afin d'ajuster une intensité de lumière de transmission de la lumière émise depuis la source de lumière (12) à la réception d'un signal depuis un dispositif de commande (11).

8. Procédé selon la revendication 7, dans lequel un angle d'inclinaison (a) de l'organe de transmission de lumière plan (61) est établi par rapport à une direction d'axe optique du trajet optique pour réduire une différence astigmatique (ΔF) causée par l'astigmatisme.

9. Procédé selon la revendication 7, dans lequel l'épaisseur de l'organe de transmission de lumière plan (61) est établie de façon à réduire une différence astigmatique (ΔF) causée par l'astigmatisme.
